(19) Europäisches Patentamt
European Patent Office
Office européen des brevets

(11) **EP 4 606 565 A1**

(12) **EUROPEAN PATENT APPLICATION**
published in accordance with Art. 153(4) EPC

(43) Date of publication:
**27.08.2025 Bulletin 2025/35**

(21) Application number: **23879731.0**

(22) Date of filing: **13.10.2023**

(51) International Patent Classification (IPC):
**B32B 9/00** (2006.01)     **B32B 27/40** (2006.01)
**B65D 65/40** (2006.01)

(52) Cooperative Patent Classification (CPC):
**B32B 9/00; B32B 15/085; B32B 27/40; B65D 65/40**

(86) International application number:
**PCT/JP2023/037230**

(87) International publication number:
**WO 2024/085088 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.10.2022 JP 2022165966**

(71) Applicants:
• **artience Co., Ltd.
Chuo-ku
Tokyo 104-0031 (JP)**
• **TOYOCOLOR CO., LTD.
Tokyo 104-8381 (JP)**

(72) Inventors:
• **KAMEYAMA, Yuji
Tokyo 104-8381 (JP)**
• **NOMURA, Takanori
Tokyo 104-8381 (JP)**
• **SUNAOSHI, Kazushi
Tokyo 104-8381 (JP)**
• **MORITA, Riho
Tokyo 104-8381 (JP)**

(74) Representative: **SSM Sandmair
Patentanwälte Rechtsanwalt
Partnerschaft mbB
Joseph-Wild-Straße 20
81829 München (DE)**

(54) **LAMINATED BODY AND MANUFACTURING METHOD THEREFOR**

(57)    A laminated body including a non-permeable substrate (I), an ink layer (III), an adhesive layer (IV), and a deposited film (V) having a silica and/or alumina deposited layer, in this order. The ink layer (III) is a layer in which an aqueous inkjet ink containing a pigment, a resin, and a siloxane-based surface additive and/or an acetylene diol-based surface additive is printed, and the ink layer (III) contains the siloxane-based surface additive and/or the acetylene diol-based surface additive in an amount of 1 to 500 mg/m$^2$.

**Description**

Technical Field

An embodiment of the present invention relates to a laminated body manufactured using a non-permeable substrate, an aqueous inkjet ink, an adhesive composition, and a deposited film, and a method for manufacturing the same.

Background Art

In a soft packaging material used for packages of containers and the like of food, detergent, cosmetics, and pharmaceuticals, a laminated body obtained by bonding a metal deposited film, a metal foil, or the like to a plastic film as necessary is used. Such a laminated body is generally manufactured using a processing method in which a metal deposited film, a metal foil, or the like separately prepared is bonded to a plastic film (hereinafter, also simply referred to as a "film") on which a printing layer is formed in advance. This processing method is called "lamination". In order to form the above mentioned printing layer, gravure printing or flexographic printing has been conventionally performed on a plastic film. Both gravure printing and flexographic printing are printing methods for transferring an ink using a plate prepared in advance, and can be said to be suitable for high-speed printing and mass production.

Meanwhile, in recent years, in a market of products using a soft packaging material, along with change and diversification of consumer needs, an increase in the number of types of the products, response to short delivery, and shortening of a product cycle have been advanced. However, as long as the above printing method is adopted, a plate for printing is required, and thus, in many cases, it is unprofitable for small-quantity and multi-product production. In addition, it takes time to prepare a plate, and therefore it is currently difficult to respond to short delivery.

In contrast to the above printing method, a digital printing method does not require a plate, and thus can reduce cost and respond to short delivery, and is expected to be widely used in the future. In an inkjet printing method, which is a type of digital printing method, ink droplets are discharged from very fine nozzles onto a substrate and attached to the substrate to form characters and images. The inkjet printing method has advantages such as low noise level, simple operation, and easy colorization of the printing apparatus to be used, and thus use of the inkjet printing method is expanding also in industrial applications. Conventionally, inks used in the inkjet printing method in industrial applications have been solvent types or UV (ultraviolet) curing types, but aqueous inks have been adopted from the viewpoint of consideration for environment and occupational safety (see, for example, Patent Literature 1).

When the inkjet printing method is used in manufacturing a soft packaging material, printing and formation of characters and images on a film are essential. An aqueous type ink (also referred to as "aqueous inkjet ink" in the present description) used in the inkjet printing method has been conventionally used for printing on a substrate having high permeability, such as plain paper or exclusive paper (for example, photographic glossy paper). When printing is performed with such an aqueous inkjet ink on a non-permeable substrate such as a film, droplets of the aqueous inkjet ink after being attached to the film do not permeate the substrate at all. Therefore, drying due to permeation does not occur, causing problems such as mixed color bleeding and color unevenness, and deterioration of clearness and visibility of characters and images.

In general, since the aqueous inkjet ink does not permeate a non-permeable substrate at all, a layer of the aqueous inkjet ink is easily peeled off due to rubbing or the like. Not limited to such peeling, a phenomenon where peeling occurs at a boundary between adjacent layers is referred to as "delamination", which can be a fatal problem when the laminated body is used as a soft packaging material. In addition, in the laminated body, peeling may occur due to a fracture occurring inside the layer. Such a phenomenon is called "cohesive fracture", and is also a problem in practical use. For example, when a printed matter is stored in a wound state or a stacked state, pressure is applied to a printed surface, and that pressure causes delamination and cohesive fracture, thereby causing a phenomenon called blocking. The above mentioned blocking means a phenomenon where part of the ink is stripped off by a substrate when the substrate or the like attached to the printed surface is peeled off.

In the aqueous inkjet ink, in general, in order to prevent occurrence of mixed color bleeding and color unevenness and to obtain a printed matter excellent in clearness and visibility, a surface additive is added to the aqueous inkjet ink to control wettability. However, when a laminated body is manufactured simply using such an aqueous inkjet ink, the surface additive bleeds to the surface of the printed matter, the interface of another layer, and the inside of the other layer, which causes delamination and cohesive fracture. The bleeding mentioned above means a phenomenon where a target substance oozes out to the interface of another layer, the inside of the other layer, the surface of a laminated body, and the like.

Furthermore, when a laminated body manufactured from a printed matter on a non-permeable substrate such as a film is used as a packaging material (for example, a pouch package), part of the content, external water vapor, or the like permeates the laminated body. Therefore, there is also a problem that delamination and cohesive fracture tend to occur, for example, after long-term storage. Therefore, for example, when considering use as a packaging material, it can be said that prevention of delamination and cohesive fracture after long-term storage is an essential issue.

As an example method for solving the permeation of contents, water vapor, and the like described above, there is a method for incorporating a layer having an effect of suppressing permeation of oxygen, water vapor, and the like (gas barrier effect) into a layer forming a laminated body. In general, a deposited film is used in order to enhance a gas barrier effect, and the deposited film is manufactured by depositing a metal (oxide) component on a plastic film. A film using aluminum as the metal (oxide) component (aluminum deposited film) is known as a representative example of deposited films. Meanwhile, by using silica or alumina as the metal (oxide) component, a transparent deposited film (transparent deposited film) is obtained. Such a transparent deposited film has advantages like a high gas barrier effect and recognizability to see the contents when a pouch package or the like is prepared. Meanwhile, there is a problem where cracking is likely to occur on a surface of the silica and/or alumina deposited layer due to bending or the like, and a barrier property of oxygen, water vapor, or the like is deteriorated.

As an example of a laminated body manufactured using an inkjet ink and having a layer of a transparent deposited film, Patent Literature 2 discloses a packaging container using a film on which silicon oxide or aluminum oxide is deposited as a transparent barrier layer and having a layer printed with an inkjet ink on a white ink layer formed by gravure printing or the like. However, the composition of the inkjet ink and a printing method with the inkjet ink are not specifically described, and it is not clear whether the above-described problems can be solved. Patent Literature 3 also discloses a packaging bag having a barrier layer using a film on which silica or alumina is deposited, and a layer printed with an inkjet ink. However, in Patent Literature 3, a preferable inkjet ink is an oily (non-aqueous) inkjet ink, and an example using an aqueous inkjet ink is also not disclosed.

As described above, a method for obtaining a laminated body that is excellent in printed image quality, does not cause delamination or cohesive fracture, and has a favorable gas barrier property when a non-permeable substrate and a transparent deposited film are used in addition with using an aqueous inkjet ink has not been disclosed so far.

Citation List

Patent Literature

    Patent Literature 1: JP 2014-94495 A
    Patent Literature 2: JP 2004-67219 A
    Patent Literature 3: JP 2016-60534 A

Summary of Invention

Technical Problem

An embodiment of the present invention has been made in order to solve the above problems, and to provide a laminated body that is excellent in clearness and visibility without causing mixed color bleeding or color unevenness, does not cause delamination or cohesive fracture, also has a favorable gas barrier property, and does not cause the delamination and the cohesive fracture and maintains the gas barrier property to be favorable even after application of an action such as bending, twisting, or stretching and shrinking, or even after long-term storage. Another embodiment of the present invention provides a laminated body excellent in recyclability in addition to the above-described characteristics.

Note that, in the present description, "being excellent in clearness and visibility without causing mixed color bleeding or color unevenness" is also simply referred to as "having excellent printed image quality".

Solution to Problem

As a result of intensive studies to solve the above problems, the present inventors have found that the above problems can be suitably solved by a laminated body manufactured using a non-permeable substrate, a specific aqueous inkjet ink layer, an adhesive layer, and a deposited film on which silica and/or alumina are deposited, in which the amount of a specific surface additive present in the ink layer is specified, and thus have completed the present invention.

That is, embodiments of the present invention relate to the following [1] to [9]. Note that the present invention is not limited to the following embodiments, and includes various embodiments.

    [1] A laminated body including a non-permeable substrate (I), an ink layer (III), an adhesive layer (IV), and a deposited film (V) in this order, wherein

the ink layer (III) is a layer in which an aqueous inkjet ink containing a pigment, a resin, and a siloxane-based surface additive and/or an acetylene diol-based surface additive is printed, a content of the siloxane-based surface additive and/or the acetylene diol-based surface additive per unit area of the ink layer (III) is from 1 to 500 mg/m$^2$, and the deposited film (V) includes a resin film and a silica and/or alumina deposited layer.

[2] The laminated body according to [1], further including a pretreatment layer (II) between the non-permeable substrate (I) and the ink layer (III), wherein

the pretreatment layer (II) is a layer formed with a pretreatment liquid containing an aggregating agent, and a content of the aggregating agent per unit area of the pretreatment layer (II) is from 0.02 to 1 g/m$^2$.

[3] The laminated body according to [2], wherein

the pretreatment layer (II) further contains a resin (IIR) excluding the aggregating agent, and a content of the resin (IIR) per unit area of the pretreatment layer (II) is from 0.05 to 1 g/m$^2$.

[4] The laminated body according to any one of [1] to [3], wherein the adhesive layer (IV) is a layer formed with a cured film of a non-solvent adhesive composition containing a polyisocyanate compound and a polyol compound.
[5] The laminated body according to [4], wherein

the polyisocyanate compound contains an aromatic polyisocyanate compound, and a content of the aromatic polyisocyanate compound per unit area of the adhesive layer (IV) is from 0.05 to 2.0 g/m$^2$.

[6] The laminated body according to any one of [1] to [5], wherein the non-permeable substrate (I) is a polyolefin film, and the resin film is a polyolefin resin film.
[7] The laminated body according to any one of [1] to [6], wherein the silica and/or alumina deposited layer is in contact with the adhesive layer (IV).
[8] A method for manufacturing a laminated body including a non-permeable substrate (I), an ink layer (III), an adhesive layer (IV), and a deposited film (V) in this order, the method including steps 1 to 4 below:

step 1: a step of printing an aqueous inkjet ink containing a pigment, a resin, and a siloxane-based surface additive and/or an acetylene diol-based surface additive on the non-permeable substrate (I) such that the content of the siloxane-based surface additive and/or the acetylene diol-based surface additive per unit area of the ink layer (III) after drying is from 1 to 500 mg/m$^2$, and then drying the ink to obtain the ink layer (III);
step 2: a step of forming an adhesive layer precursor on the ink layer (III), and/or the deposited film (V), which is a resin film including a silica and/or alumina deposited layer;
step 3: a step of overlaying the ink layer (III) and the deposited film (V) with the adhesive layer precursor interposed therebetween; and
step 4: a step of curing the adhesive layer precursor to form the adhesive layer (IV).

[9] A method for manufacturing a laminated body including a non-permeable substrate (I), a pretreatment layer (II), an ink layer (III), an adhesive layer (IV), and a deposited film (V) in this order, the method including steps 0, 1', 2, 3, and 4 below:

step 0: a step of applying a pretreatment liquid containing an aggregating agent onto the non-permeable substrate (I) such that the content of the aggregating agent per unit area of the pretreatment layer (II) after drying and/or curing is from 0.02 to 1 g/m$^2$, and then drying and/or curing the pretreatment liquid to obtain the pretreatment layer (II);
step 1': a step of printing an aqueous inkjet ink containing a pigment, a resin, and a siloxane-based surface additive and/or an acetylene diol-based surface additive on the non-permeable substrate (I) such that the content of the siloxane-based surface additive and/or the acetylene diol-based surface additive per unit area of the ink layer (III) after drying is from 1 to 500 mg/m$^2$, and at least part of the aqueous inkjet ink overlaps the pretreatment layer (II), and then drying the ink to obtain the ink layer (III);
step 2: a step of forming an adhesive layer precursor on the ink layer (III), and/or the deposited film (V), which is a resin film including a silica and/or alumina deposited layer;

step 3: a step of overlaying the ink layer (III) and the deposited film (V) with the adhesive layer precursor interposed therebetween; and

step 4: a step of curing the adhesive layer precursor to form the adhesive layer (IV).

The disclosure of the present application relates to subject matters described in Japanese Patent Application No. 2022-165966 filed on October 17, 2022, the entire disclosure of which is incorporated herein by reference.

Advantageous Effects of Invention

According to an embodiment of the present invention, it is possible to obtain a laminated body that is excellent in clearness and visibility without causing mixed color bleeding or color unevenness, does not cause delamination or cohesive fracture, also has a favorable gas barrier property, and does not cause the delamination or the cohesive fracture and maintains the gas barrier property to be favorable even after application of an action such as bending, twisting, or stretching and shrinking, or even after long-term storage. According to another embodiment of the present invention, it is possible to obtain a laminated body excellent in recyclability in addition to the above-described characteristics.

Description of Embodiments

Hereinafter, a laminated body which is an embodiment of the present invention (hereinafter, also simply referred to as "of the present embodiment") will be described with reference to preferred forms.

<Laminated Body>

As described above, the laminated body of the present embodiment includes a non-permeable substrate (I), an ink layer (III), an adhesive layer (IV), and a deposited film (V) in this order. In addition, the laminated body may include a pretreatment layer (II) between the non-permeable substrate (I) and the ink layer (III). Note that even a laminated body as exemplified below, whose composition is partially as described above, belongs to the laminated body of the present embodiment. Note that, in the following examples, each pretreatment layer may be present or absent.

· Non-permeable substrate (excluding deposited film)/first pretreatment layer/first ink layer/first adhesive layer/first deposited film/second pretreatment layer/second ink layer/second adhesive layer/second deposited film
· First non-permeable substrate (excluding deposited film)/first pretreatment layer/first ink layer/first adhesive layer/deposited film/second pretreatment layer/second ink layer/second adhesive layer/second non-permeable substrate (excluding deposited film)
· First non-permeable substrate (excluding deposited film)/first pretreatment layer/first ink layer/adhesive layer/deposited film/second pretreatment layer/second ink layer/second non-permeable substrate (excluding deposited film)
· First deposited film/first pretreatment layer/first ink layer/first adhesive layer/second deposited film/second pretreatment layer/second ink layer/second adhesive layer/third deposited film

<Non-permeable substrate (I)>

Examples of the non-permeable substrate (I) forming the laminated body of the present embodiment include thermoplastic or thermosetting resin films, and the thermoplastic resin film is preferable. Examples of the thermoplastic resin include a polyolefin resin, a polyester resin, a polyamide resin, a polystyrene resin, a polycarbonate resin, an acrylonitrile resin, an acrylonitrile-styrene copolymer (AS) resin, a polyimide resin, a cellulose resin, a vinyl chloride resin, a vinyl acetate resin, an ABS resin, a (meth)acrylic resin, an acetal resin, an ethylene-vinyl alcohol copolymer (EVOH) resin, and a cellulose-based resin.

More specifically, as the non-permeable substrate (I), a polyolefin resin film such as polyethylene (PE) or polypropylene (PP); a polyester resin film such as polyethylene terephthalate (PET), polyethylene naphthalate (PEN), or polylactic acid (PLA); a polyamide resin film such as nylon 6, nylon 12, or poly-p-xylylene adipamide (MXD6 nylon); a polystyrene resin film; a polycarbonate resin film; a polyacrylonitrile film; an acrylonitrile-styrene copolymer resin film; a polyimide resin film; a cellulose resin film such as cellophane; a laminated body of these films (for example, a nylon 6/MXD6/nylon 6 laminated body or a nylon 6/ethylene-vinyl alcohol copolymer/nylon 6 laminated body); and a film formed with a mixture of resins listed above can be used.

Among these, those having mechanical strength and dimensional stability are preferable, and for example, a polyolefin resin film and a polyester resin film may be used. More specifically, among the polyolefin resin films, an oriented polypropylene resin film is preferable, and for example, a uniaxially oriented polypropylene (OPP) film and a biaxially oriented polypropylene (BOPP) film can be preferably used. Among the polyester resin films, a polyethylene terephthalate film and a polycarbonate film can be preferably used.

When the non-permeable substrate (I) is a laminated body of a plurality of resin substrates, the resin substrates are preferably laminated with an adhesive layer interposed therebetween. The method for forming the adhesive layer is not limited, and the adhesive layer can be formed with a conventionally known method using a conventionally known adhesive composition.

When the non-permeable substrate is a resin substrate, an additive such as an antistatic agent or an ultraviolet inhibitor may be contained in the non-permeable substrate as necessary. In one embodiment, a deposited film may be used as the non-permeable substrate (I), and as the deposited film, an aluminum deposited film and a transparent deposited film including a deposited layer of silica, alumina, or the like can be suitably used. Furthermore, a surface of the non-permeable substrate (I) (a surface in contact with the pretreatment layer (II) and/or the ink layer (III) described later) may be subjected to a corona treatment or a plasma treatment.

The thickness of the non-permeable substrate (I) is not particularly limited, but may be preferably 5 $\mu$m or more and 200 $\mu$m or less, more preferably 10 $\mu$m or more and 100 $\mu$m or less, and still more preferably 10 $\mu$m or more and 50 $\mu$m or less.

<Pretreatment layer (II)>

A role of the pretreatment layer (II) in the laminated body of the present embodiment is to assist image formation of an aqueous inkjet ink and to improve printed image quality over a long period of time. In addition, the role of the pretreatment layer (II) is to increase an adhesion force between the non-permeable substrate (I) and the pretreatment layer (II) and the adhering force between the ink layer (III) and the pretreatment layer (II), and to further improve an attaching force between the non-permeable substrate (I) and the ink layer (III). In addition, the pretreatment layer (II) also exhibits an effect of improving the attaching force between the adhesive layer (IV) and the non-permeable substrate (I) after image formation with an aqueous inkjet ink.

Note that, in the present description, the "attaching force" refers to a force for bonding layers on both sides of an arbitrary layer to each other via the arbitrary layer. Therefore, when the attaching force is high, delamination between the arbitrary layer and the layers on both sides can be suppressed. The arbitrary layer may be a laminated body of two or more layers.

In addition, in the present description, the "adhering force" refers to a force for bonding a certain layer and a layer adjacent to the certain layer to each other. Therefore, when the closely adhering force is high, delamination between the certain layer and the adjacent layer can be suppressed.

The layer thickness of the pretreatment layer (II) is preferably 0.1 to 1.6 $\mu$m. When the layer thickness of the pretreatment layer (II) is 0.1 $\mu$m or more, the adhering force to the non-permeable substrate (I) is favorable, and a laminated body having excellent printed image quality over a long period of time can be obtained. When the layer thickness is 1.6 $\mu$m or less, the difference between the attaching force between the non-permeable substrate (I) and the adhesive layer (IV) and the adhering force between the non-permeable substrate (I) and the pretreatment layer (II) becomes smaller. Therefore, strain hardly occurs between the adhesive layer (IV) and the non-permeable substrate (I), and delamination after lamination can be prevented. In addition, since a cohesive force in the pretreatment layer (II) is maintained, cohesive fracture in the pretreatment layer (II) can be suppressed, and as a result, the attaching force of the entire laminated body is improved.

<Pretreatment liquid>

The pretreatment layer (II) is a layer formed with a pretreatment liquid containing an aggregating agent. In general, examples of a pretreatment liquid to be used together with an aqueous inkjet ink include a liquid forming an ink-receiving layer that allows the aqueous inkjet ink to permeate the inside and a liquid forming an ink-aggregating layer that aggregates and/or thickens components in the aqueous inkjet ink. The pretreatment layer (II) forming the laminated body of the present embodiment may be an ink-receiving layer or an ink-aggregating layer. In one embodiment, from the viewpoints of obtaining a laminated body that has excellent printed image quality as swelling of the above pretreatment layer (II) is unlikely to occur and mixed color bleeding and color unevenness in the ink layer (III) are suitably suppressed, and easily adjusting the layer thickness to fall within the above range to result in preventing the delamination easily during lamination and after aging, it is preferable to form the pretreatment layer (II) using the pretreatment liquid that forms an ink-aggregating layer.

The pretreatment liquid to be used for formation of the pretreatment layer (II) preferably contains an aggregating agent from the viewpoint of forming an ink-aggregating layer. As the aggregating agent, a metal salt, a cationic polymer compound, an organic acid, or the like can be used. Among these, a metal salt has a particularly strong function as an aggregating agent, and is effective in aggregating and/or thickening a pigment and other components contained in an aqueous inkjet ink even in small amounts. Therefore, a metal salt is suitably used because a laminated body particularly excellent in printed image quality, with reduced mixed color bleeding and color unevenness, can be obtained, and furthermore, recyclability is excellent when a laminated body is formed. Note that only aggregating agents may be used singly or in combination of two or more types thereof.

The type of metal salt is not particularly limited as long as it is formed with a metal ion and an anion to be bonded to the metal ion. In particular, the metal ion is preferably a polyvalent metal ion because a clear image with suppressed mixed color bleeding and color unevenness can be obtained by instantaneously interacting with a pigment and other components present in an aqueous inkjet ink described later. Furthermore, the metal salt more preferably contains at least one selected from the group consisting of $Ca^{2+}$, $Mg^{2+}$, $Zn^{2+}$, $Al^{3+}$, $Fe^{2+}$, and $Fe^{3+}$ as the polyvalent metal ion because a laminated body particularly excellent in printed image quality, with reduced mixed color bleeding and color unevenness, can be obtained. The metal salt particularly preferably contains at least one selected from the group consisting of $Ca^{2+}$, $Mg^{2+}$, and $Al^{3+}$. Meanwhile, specific examples of the anion include an inorganic anion such as a chloride ion, a sulfate ion, or a nitrate ion, and an organic acid ion such as an ascorbate ion, a formate ion, an acetate ion, a propionate ion, or a lactate ion, but are not limited thereto.

In the pretreatment liquid used for forming the pretreatment layer (II) forming the laminated body of the present embodiment, a metal salt of an organic acid is preferably selected as the metal salt from the viewpoint of high compatibility with other components and being effective for suppressing delamination. In particular, calcium salts of formic acid and/or lactic acid are particularly preferably used because of its excellent solubility in water and strong interaction with components in an aqueous inkjet ink. Note that the metal salt may be used singly or in combination of two or more types thereof.

Meanwhile, as for the cationic polymer compound, a conventionally known cationic polymer compound can be arbitrarily used as long as it is effective in aggregation and/or thickening of a pigment and other components in an aqueous inkjet ink, has suitable solubility, and further has diffusibility in the pretreatment liquid. The cationic polymer compound may be used singly or in combination of two or more types thereof. Note that, in the present description, the "cationic polymer compound" refers to a resin having a cationic group but no anionic group as exemplified below. Examples of the resin include a compound obtained by polymerizing a plurality of monomers and having a weight average molecular weight of 1,000 or more as measured using a method described later.

Examples of the cationic group contained in the cationic polymer compound include an amino group, an ammonium group, an amide group, an imino group, a hydrazino group, and a ureido group. Examples of a material used for introducing the cationic group into the cationic polymer compound include: an amine compound such as vinylamine, allylamine, diallylamine, diallylamine ammonium, methyldiallylamine, or ethyleneimine; an amide compound such as acrylamide or vinylformamide; a cyanamide compound such as dicyandiamide; an epihalohydrin compound such as epifluorohydrin, epichlorohydrin, methyl epichlorohydrin, epibromohydrin, or epiiodohydrin; a cyclic vinyl compound such as vinylpyrrolidone, vinylcaprolactam, or vinylimidazole; an amidine compound; a pyridinium salt compound; and an imidazolium salt compound.

Among the above compounds, the cationic polymer compound is preferably a compound containing one or more structural units selected from an allylamine structural unit, a diallylamine structural unit, a diallylammonium structural unit, and an epichlorohydrin structural unit. All of the above resins are strong electrolytes, have favorable dissolution stability in the pretreatment liquid, and are excellent in aggregation and/or thickening ability of a pigment and other components in an aqueous inkjet ink.

When an organic acid is used as an aggregating agent, for example, a monohydroxy (poly)carboxylic acid such as lactic acid, tartronic acid, malic acid, or citric acid; a dihydroxy (poly)carboxylic acid such as glyceric acid or tartaric acid; and other (poly)carboxylic acid such as formic acid, acetic acid, propionic acid, malonic acid, succinic acid, adipic acid, glutaric acid, or fumaric acid can be used. Among these compounds, a monohydroxy (poly)carboxylic acid and/or a dihydroxy (poly)carboxylic acid can be suitably used because they have suitable solubility and diffusibility in the pretreatment liquid. Note that the organic acids listed above may be used singly or in combination of two or more types thereof. The "(poly)carboxylic acid" refers to a monocarboxylic acid and a polycarboxylic acid.

The amount of the aggregating agent contained in the pretreatment layer (II) forming the laminated body of the present embodiment is preferably 0.02 to 1 $g/m^2$, and more preferably 0.02 to 0.6 $g/m^2$. By adjusting the content of the aggregating agent to fall within the above range, it is possible to ensure wettability of the pretreatment liquid to the non-permeable substrate (I) while suppressing mixed color bleeding and color unevenness, and thus, can improve the adhering force to the non-permeable substrate (I). Furthermore, recyclability of the laminated body can also be improved.

The pretreatment liquid preferably contains a resin (IIR) (also referred to as "other resin (IIR)" in the present description) excluding the aggregating agent such as the above cationic polymer compound (different from the aggregating agent) from the viewpoints of adhesion to the non-permeable substrate (I) and strength of the pretreatment layer (II). Specific examples of the other resin (IIR) include a (meth)acrylic resin, a (meth)acrylic resin, a urethane resin, a (meth)acrylic-urethane resin, a polyester resin, a polyolefin resin, a styrene-butadiene copolymer resin, and a vinyl chloride resin. These resins may be used singly or in combination of two or more types thereof. Note that, in the present invention, "(meth)acrylic" means acrylic and methacrylic. A monomer forming the "(meth)acrylic resin" also includes a styrene-based monomer such as styrene, methylstyrene, aminostyrene, sodium styrenesulfonate, or divinylbenzene.

The form of the other resin (IIR) contained in the pretreatment liquid may be either a water-soluble resin or resin particles, but resin particles are particularly preferable. The resin particles can improve adhesion to the non-permeable substrate (I), and blocking resistance, lamination suitability, and abrasion resistance of a printed matter. In addition, the resin particles are also suitable because a laminated body having no mixed color bleeding or color unevenness and excellent printed image quality can be obtained.

Note that the term "water-soluble resin" in the present description refers to a resin where a 1% by mass water mixed solution of the target resin is transparent as viewed with naked eyes in an environment of 25°C. In addition, the "resin particles" represent a form of a water-insoluble resin (resin that is not a water-soluble resin), and refers to a resin where a cumulative 50% diameter value (D50) (volume basis) of a water mixed solution of the target resin measured using a dynamic light scattering particle size distribution analyzer (for example, Nanotrac UPAEX-150 manufactured by MicrotracBEL Corp.) is 5 to 1,000 nm.

Meanwhile, by suitably adjusting the acid value of the resin excluding the aggregating agent (other resin) (IIR), it is possible to improve printed image quality without inhibiting functional expression of the aggregating agent. In addition, by interaction of the other resin (IIR) with the non-permeable substrate (I) and the ink layer (III), adhesion to these layers is improved. Furthermore, the pretreatment layer (II) containing the other resin (IIR) having a suitable acid value is easily dissolved or swollen in a basic solution when being immersed in the basic solution, and therefore the non-permeable substrate (I) can be easily separated from the laminated body including the pretreatment layer (II).

As described above, the acid value of the other resin (IIR) is preferably 1 to 60 mgKOH/g from the viewpoint of obtaining a laminated body excellent in all of printed image quality, delamination prevention, and recyclability. The acid value is more preferably 2 to 50 mgKOH/g, still more preferably 3 to 40 mgKOH/g, particularly preferably 4 to 30 mgKOH/g, and extremely preferably 5 to 25 mgKOH/g.

In the present description, "acid value (of a resin)" is the number of mg of potassium hydroxide required for neutralizing acid groups contained in 1 g of the resin. In the present invention, when an acid group is not involved in a reaction in obtaining a resin (for example, a (meth)acrylic resin, a urethane resin, or a (meth)acrylic-urethane-based resin), a theoretical value calculated using the following method is used as the acid value of the resin. Meanwhile, when an acid group is involved in a reaction in obtaining a resin (for example, a polyester resin), an actually measured value measured using the following method is used as the acid value of the resin.

As an example method for calculating a theoretical acid value, when a resin contains a polymerizable monomer which has na acid groups with an acid value of va in one molecule and having a molecular weight of Ma in an amount of Wa% by mass in polymerizable monomers forming the resin, an acid value (mgKOH/g) of the resin is obtained by using the following formula 1.

Formula 1:

$$(\text{Acid value}) = \{(\text{va} \times \text{na} \times \text{Wa}) \div (100 \times \text{Ma})\} \times 56.11 \times 1000$$

In the above formula 1, "56.11" is the molecular weight of potassium hydroxide.

Meanwhile, an actually measured value of an acid value is measured using, for example, a potentiometric titration method. Specifically, using an "automatic potentiometric titrator AT-610" manufactured by Kyoto Electronics Manufacturing Co., Ltd., a resin is dissolved in an ethanol/toluene mixed solvent, and then titration is performed with a 0.1 mol/L potassium hydroxide-ethanol solution, and the acid value is calculated from the obtained titration curve.

When the other resin (IIR) having an acid value is used, a basic compound can be used as a neutralizing agent for the purpose of improving hydrophilicity of the other resin (IIR) and improving storage stability of the pretreatment liquid. As the basic compound, for example, amines such as ammonia, trimethylamine, triethylamine, butylamine, dimethylaminoethanol, diethylaminoethanol, diethanolamine, triethanolamine, aminomethylpropanol, and morpholine; and a hydroxide such as potassium hydroxide or sodium hydroxide can be used.

Note that amines having a boiling point of 100°C or higher at 1 atm and a hydroxide of an alkali metal can be suitably used as the neutralizing agent from the viewpoint that the dissolution of the pretreatment layer (II) in a basic solution suitably proceeds and the recyclability can be improved when the non-permeable substrate (I) is separated from the laminated body. Specific examples of the amines include dimethylaminoethanol, diethylaminoethanol, diethanolamine, triethanolamine, and aminomethylpropanol. Specific examples of the hydroxide of an alkali metal include potassium hydroxide and sodium hydroxide.

When the pretreatment liquid contains the other resin (IIR), the amount of the other resin (IIR) contained in the pretreatment layer (II) is preferably 0.05 to 1 g/m² from the viewpoints of its coatability to the non-permeable substrate (I), its adhering force to the non-permeable substrate (I), and its recyclability.

In addition, in order to uniformly apply the pretreatment liquid onto the non-permeable substrate (I), the pretreatment liquid can use a surface additive singly or in combination of two or more types thereof. Examples of the surface additive include a siloxane-based surface additive, an acrylic-based surface additive, a fluorine-based surface additive, an acetylene diol-based surface additive, and a polyoxyalkylene alkyl ether-based surface additive. In a preferred embodiment, it is preferable to use a siloxane-based surface additive and/or an acetylene diol-based surface additive from the viewpoints of controlling surface tension of the pretreatment liquid, imparting excellent wettability on the non-permeable substrate (I), thus leading to suppression of mixed color bleeding and color unevenness and improving the printed image quality of the laminated body. The pretreatment liquid particularly preferably contains an acetylene diol-based surface additive.

When the pretreatment liquid contains a surface additive, a blending amount thereof may be preferably 0.01 to 8% by mass, more preferably 0.05 to 5% by mass, and particularly preferably 0.1 to 3% by mass with respect to the total amount of the pretreatment liquid from the viewpoint of obtaining a laminated body in which mixed color bleeding and color unevenness are suppressed and printed image quality is improved by reducing coating unevenness on the non-permeable substrate (I) and achieving uniform coating.

Surface tension of the pretreatment liquid used for formation of the pretreatment layer (II) forming the laminated body of the present embodiment is preferably 20 to 45 mN/m, more preferably 20 to 40 mN/m, and particularly preferably 20 to 35 mN/m from the same viewpoint to that in the case of the blending amount of the surface additive described above. It is suitable to adjust the type and blending amount of the surfactant and the type and blending amount of a low surface tension solvent described later so as to obtain a pretreatment liquid having the suitable surface tension. Note that, in the present description, the "surface tension" refers to static surface tension measured using a Wilhelmy method (plate method, vertical plate method) in an environment of 25°C.

The pretreatment liquid can also use a low surface tension solvent in order to obtain a pretreatment liquid excellent in coating or printability when being applied to the non-permeable substrate (I) and to obtain a desired value for surface tension. In the present description, the "low surface tension solvent" refers to an organic solvent having surface tension of 18 to 40 mN/m at 25°C. Specific examples thereof include isopropanol (2-propanol), n-butanol, propylene glycol, 1,2-butanediol, 1,2-hexanediol, 3-ethyl-1,2-hexanediol, diethylene glycol monomethyl ether, diethylene glycol monoisopropyl ether, diethylene glycol monobutyl ether, propylene glycol monomethyl ether, propylene glycol monopropyl ether, dimethylethanolamine, and 2-amino-2-methyl-1-propanol.

In addition, a pH adjuster can be added to the pretreatment liquid for the purpose of suppressing damage to a member used in coating of the pretreatment liquid or a printing apparatus, along with suppressing pH change over time, and maintaining performance of the pretreatment liquid for a long period of time. As the pH adjuster, a material having pH adjusting ability can be arbitrarily selected. In a case of basification, in addition to diethanolamine and triethanolamine, an alkanolamine including dimethylethanolamine, 2-amino-2-methyl-1-propanol, and the like also corresponding to the low surface tension solvent; ammonia water; a hydroxide of an alkali metal, such as sodium hydroxide or potassium hydroxide; a carbonate of an alkali metal, such as sodium carbonate, sodium hydrogen carbonate, or potassium carbonate, and the like can be used. In a case of acidification, an inorganic acid such as hydrochloric acid, sulfuric acid, or nitric acid may be used, or the above-described organic acid may be used as a material serving as both an aggregating agent and a pH adjuster. These pH adjusters may be used singly or in combination of two or more types thereof.

In addition, in order to obtain a desired physical property value, an additive such as a crosslinking agent, a thermal polymerization initiator, a photopolymerization initiator, a thickener, or a preservative can be appropriately added to the pretreatment liquid as necessary. For example, as the crosslinking agent, a blocked isocyanate compound, a carbodiimide compound, an epoxy compound, an oxazoline compound, or an aziridine compound can be used. When these additives are used, a blending amount thereof is preferably 0.01 to 8% by mass, and more preferably 0.01 to 5% by mass with respect to the total amount of the pretreatment liquid.

<Ink layer (III)>

Next, the ink layer (III) forming the laminated body of the present embodiment will be described. The ink layer (III) is a layer where an aqueous inkjet ink (also simply referred to as "ink" in the present description) is printed, and the aqueous inkjet ink contains a pigment, a resin, and at least one selected from the group consisting of a siloxane-based surface additive and an acetylene diol-based surface additive.

<Aqueous inkjet ink>

<Pigment>

The pigment that can be used in the aqueous inkjet ink may be an inorganic pigment or an organic pigment. An inorganic pigment and an organic pigment can be used in combination.

Examples of the inorganic pigment include: a white inorganic pigment such as titanium oxide, zinc white, zinc sulfide, calcium carbonate, precipitated barium sulfate, or alumina white; a black inorganic pigment such as carbon black or black iron oxide; a magenta inorganic pigment such as red iron oxide; a yellow inorganic pigment such as yellow iron oxide or titanium yellow; and a metallic inorganic pigment such as aluminum, indium, or silver.

As the white inorganic pigment, titanium oxide is suitably used among those listed above. As the titanium oxide, either an anatase type or a rutile type can be used, but it is preferable to use a rutile type in order to improve an opacifying property of a printed matter. In addition, the titanium oxide may be manufactured by any method such as a chlorine method or a sulfuric acid method, but it is preferable to use titanium oxide manufactured using the chlorine method because its whiteness degree is high.

Furthermore, the titanium oxide is preferably one whose surface is treated with an inorganic compound and/or an organic compound. Examples of the inorganic compound include compounds and oxides of silicon, aluminum, zirconium, tin, and antimony. Examples of the organic compound include a polyhydric alcohol or a derivative thereof, an alkanolamine or a derivative thereof, a higher fatty acid or a metal salt thereof, and an organometallic compound. Among these compounds, a polyhydric alcohol or a derivative thereof is preferably used because it can highly hydrophobize the surface of titanium oxide and improve dispersion stability.

As the black inorganic pigment, carbon black (C.I. Pigment Black 7) manufactured by a furnace method or a channel method is suitably used. For example, the carbon black having characteristics such as a primary particle size of 11 to 40 nm, a specific surface area measured using a BET method for 50 to 400 $m^2/g$, a volatile content of 0.5 to 10% by mass, and a pH of 2 to 10 is suitable.

Specific examples of commercially available products having such characteristics include: No. 33, No. 40, No. 45, No. 52, No. 900, No. 2200B, No. 2300, MA7, MA8, and MCF88 (manufactured by Mitsubishi Chemical Corporation); RAVEN 1080 and RAVEN 1255 (manufactured by BIRLA CARBON); REGAL 330R, REGAL 400R, REGAL 660R, MOGLTL L, and ELFTEX 415 (manufactured by Cabot Corporation); and NIPex 90, NIPex 150T, NIPex 160IQ, NIPex 170IQ, NIPex 75, PrinteX 35, PrinteX 85, PrinteX 95, and PrinteX 90 (manufactured by Orion Engineered Carbons), and any of these can be preferably used.

As the metallic inorganic pigment, aluminum and indium are suitably used, and for example, those disclosed in WO 2013/011772 A and JP 2020-132998 A can be suitably used. It is preferable to use a thin film-shaped metallic inorganic pigment from the viewpoint of obtaining a laminated body having a glittering ability, and specifically, it is suitable to use a metallic inorganic pigment having an average particle size of 0.1 to 2 $\mu$m and a thickness of 1 to 50 nm. Note that the "average particle size" is a volume-based cumulative 50% diameter measured using a dynamic light scattering method, and can be measured from a sample diluted with water as necessary using Nanotrac UPA-EX150 manufactured by MicrotracBEL Corp. as in the case of the resin particles described above. The "thickness" is, for example, a value measured using the following method. First, a metallic inorganic pigment is mixed with acetone to prepare a dilute dispersion of the metallic inorganic pigment. Subsequently, a small amount of the dilute dispersion is applied onto a glass plate and naturally dried, and the resultant product is observed from the side using a scanning electron microscope. Then, the thicknesses of randomly selected 30 particles are measured, and an average value thereof is calculated and taken as the "thickness" of the metallic inorganic pigment.

Meanwhile, examples of the organic pigment include an azo pigment, a phthalocyanine pigment, an anthraquinone pigment, a quinacridone pigment, an isoindolinone pigment, a quinophthalone pigment, a dye lake pigment, and a fluorescent pigment.

When the organic pigment is specifically exemplified in terms of a color index, examples of a cyan organic pigment include C.I. Pigment Blue 1, 2, 3, 15:1, 15:3, 15:4, 15:6, 16, 22, 60, and 64.

Examples of a magenta organic pigment include: C.I. Pigment Red 5, 7, 12, 31, 48, 49, 52, 53, 57, 112, 120, 122, 146, 147, 149, 150, 168, 170, 184, 185, 188, 202, 209, 238, 242, 254, 255, 264, 268, 269, and 282; and C.I. Pigment Violet 19, 23, 29, 30, 37, 40, and 50.

Examples of a yellow organic pigment include C.I. Pigment Yellow 10, 11, 12, 13, 14, 16, 17, 20, 24, 74, 83, 86, 93, 94, 95, 109, 110, 117, 120, 125, 128, 137, 138, 139, 147, 148, 150, 151, 154, 155, 166, 168, 180, 185, and 213.

Examples of a black organic pigment include aniline black, perylene black, and azomethine azo black. Note that a plurality of organic pigments such as the cyan organic pigment, the magenta organic pigment, the yellow organic pigment, a brown organic pigment described later, and an orange organic pigment described later can also be used to form a black pigment.

As a white organic pigment, hollow resin particles can be used. The hollow resin particles have a smaller specific gravity (apparent density) than titanium oxide or the like, and can easily suppress sedimentation over time, and therefore can provide an aqueous inkjet ink excellent in storage stability. Note that, in order to obtain a white ink having both storage stability and an opacifying property, hollow resin particles and titanium oxide may be used in combination as a pigment.

In addition to the organic pigments listed above, an orange organic pigment, a green organic pigment, a brown organic pigment, and the like can also be used. Specific examples thereof include: C.I. Pigment Orange 16, 36, 38, 40, 43, 62, 63, 64, and 71; C.I. Pigment Green 7, 10, and 36; and Pigment Brown 23, 25, and 26.

In the aqueous inkjet ink used to manufacture the laminated body of the present embodiment, a plurality of the pigments listed above can be mixed and used in order to adjust hue and color developability of the obtained laminated body to fall within a suitable range. For example, one or more pigments selected from a cyan organic pigment, a magenta organic pigment, an orange organic pigment, and a brown organic pigment can be added in a small amount to a black ink using carbon black in order to improve the hue at a low coverage rate.

These pigments are contained preferably in a range of 2 to 20% by mass, more preferably in a range of 2.5 to 15% by mass, particularly preferably in a range of 3 to 10% by mass with respect to the total amount of the aqueous inkjet ink, except in the case of a white ink and in the case of an aqueous inkjet ink containing a metallic inorganic pigment. In the case of the white ink, the content of the pigments is preferably 5 to 40% by mass, and more preferably 8 to 30% by mass with respect to the total amount of the white ink. In the case of the aqueous inkjet ink containing a metallic inorganic pigment, the content of the metallic inorganic pigment is preferably 0.2 to 8% by mass, more preferably 0.3 to 6% by mass, and particularly preferably 0.5 to 4% by mass with respect to the total amount of the aqueous inkjet ink. By setting the content of the pigments to 2% by mass or more (5% by mass or more in the case of the white ink, and 0.2% by mass or more in the case of the aqueous inkjet ink containing a metallic inorganic pigment), sufficient color developability (opacifying property in the case of the white ink, and brightness in the case of the aqueous inkjet ink containing a metallic inorganic pigment) can be obtained even in one-pass printing. By setting the content of the pigments to 20% by mass or less (40% by mass or less in the case of the white ink, and 8% by mass or less in the case of the aqueous inkjet ink containing a metallic inorganic pigment), viscosity of the aqueous inkjet ink can be adjusted to fall within a range suitable for inkjet printing. In addition, storage stability of the aqueous inkjet ink can be maintained to be favorable, and as a result, long-term discharge stability can be ensured.

<Resin>

As the resin contained in the ink layer (III) forming the laminated body of the present embodiment, that is, the resin contained in the aqueous inkjet ink, which is a pigment dispersing resin for stably maintaining the dispersion state of the above-described pigment in the aqueous inkjet ink, can be used preferably. In addition, a binder resin for improving abrasion resistance of the ink layer (III) and attaching force between the non-permeable substrate (I) and the adhesive layer (IV) can be preferably used. At this time, two types of resins having different structures may be used as the pigment dispersing resin and the binder resin, respectively, or one type of resin may have both functions as the pigment dispersing resin and as the binder resin.

<Pigment dispersing resin>

In general, examples of a method for stably maintaining dispersion of a pigment in an aqueous inkjet ink include: (1) a method in which a water-soluble resin is adsorbed to a pigment surface; (2) a method in which a water-soluble and/or water-dispersible surfactant is adsorbed to a pigment surface; (3) a method in which a hydrophilic functional group is chemically and physically introduced to a pigment surface and dispersed in an aqueous inkjet ink without a resin or a surfactant (self-dispersible pigment); and (4) a method in which a pigment is coated with a water-insoluble resin, and as necessary, the pigment is further dispersed in an aqueous inkjet ink using another water-soluble pigment dispersing resin or a surfactant.

In the aqueous inkjet ink used for the manufacture of the laminated body of the present embodiment, the method (1) or (4) above, that is, the method for dispersing a pigment using a resin (pigment dispersing resin) is suitably selected.

Regarding the method (1), examples of a method for manufacturing a pigment dispersion containing a pigment to which a water-soluble resin is adsorbed include the following method A.

(Method A)

A method in which a water-soluble pigment dispersing resin, water, and as necessary, a water-soluble organic solvent are mixed and stirred to prepare a pigment dispersing resin aqueous solution. A pigment and as necessary, a water-soluble organic solvent, a surface additive, a preservative, and the like are added to this pigment dispersing resin aqueous solution, and after the mixture is mixed and stirred (pre-mixed), it is then subjected to a dispersion treatment using a conventionally known dispersing apparatus.

Note that, after the dispersion treatment, centrifugation, filtration, and the like may be performed to remove coarse components.

Regarding the method (4), examples of a method for manufacturing a pigment dispersion containing a pigment coated with a water-insoluble resin include the following methods B, C, and D.

(Method B)

A method in which a water-insoluble pigment dispersing resin is dissolved in an organic solvent such as methyl ethyl ketone, and the pigment dispersing resin is neutralized as necessary to prepare a pigment dispersing resin solution. A pigment, water, and as necessary, a water-soluble organic solvent, a surface additive, a preservative, and the like are added to this pigment dispersing resin solution, and after the mixture is mixed and stirred (pre-mixed), it is then subjected to a dispersion treatment using a conventionally known dispersing apparatus. Then the organic solvent is distilled off by distillation under reduced pressure, and as necessary, centrifugation, filtration, and the like are performed to remove coarse components.

Note that, after the organic solvent is distilled off, a crosslinking treatment by addition of a crosslinking agent (for example, a polyepoxy compound or a polycarbodiimide compound) may be performed. After the crosslinking treatment, coarse component may be removed (again).

(Method C)

A method in which a water-soluble pigment dispersing resin having a carboxy group, water, and as necessary, a water-soluble organic solvent are mixed and stirred to prepare a pigment dispersing resin aqueous solution. A pigment and as necessary, a water-soluble organic solvent, a surface additive, a preservative, and the like are added to this pigment dispersing resin aqueous solution, and after the mixture is mixed and stirred (pre-mixed), it is then subjected to a dispersion treatment using a conventionally known dispersing apparatus. Then the water-soluble pigment dispersing resin is made insoluble in water by a crosslinking treatment by addition of a crosslinking agent (for example, a polyepoxy compound or a polycarbodiimide compound).

Note that, after the crosslinking treatment, centrifugation, filtration, and the like may be performed to remove coarse components.

(Method D)

A method in which a pigment is added to a mixture of hydrophobic monomers forming a pigment dispersing resin, and after the mixture is mixed and stirred, it is then subjected to a dispersion treatment using a conventionally known dispersing apparatus to prepare a pigment dispersed monomer mixture. Subsequently, the pigment dispersed monomer mixture is mixed with an aqueous emulsifier solution prepared in advance, and a hydrophobic material (hydrophobe) is further added thereto to disperse the monomer mixture in water (O/W type mini-emulsion), and then a polymerization initiator is added thereto to polymerize the monomers.

Note that, after the polymerization, centrifugation, filtration, and the like may be performed to remove coarse components.

The water-soluble pigment dispersing resin used in the method (1) preferably has an acid value of 30 to 375 mgKOH/g. By adjusting the acid value to fall within the above range, the water-soluble pigment dispersing resin and a polyisocyanate component present in the adhesive layer (IV) easily react with each other, and in addition, solubility in the aqueous inkjet ink can be ensured. This makes it possible to suppress unevenness of the pigment dispersing resin inside the ink layer (III), and to suppress cohesive fracture of the ink layer (III) and delamination from an adjacent layer. In addition, when the interaction between water-soluble pigment dispersing resin molecules become preferable, viscosity of the pigment dispersion and the aqueous inkjet ink can be suppressed and storage stability can be improved. Furthermore, when the acid value is 375 mgKOH/g or less, excessive aggregation is suppressed when the water-soluble pigment dispersing resin is combined with the pretreatment layer (II), and a laminated body having no color unevenness and excellent clearness is obtained. The acid value of the water-soluble pigment dispersing resin used in the method (1) is more preferably 65 to 350 mgKOH/g, still more preferably 100 to 300 mgKOH/g, and particularly preferably 125 to 280 mgKOH/g because the above-described effect is more suitably exhibited.

Meanwhile, the acid value of the water-insoluble pigment dispersing resin used in the method (4) is preferably 1 to 70 mgKOH/g. By adjusting the acid value to fall within the above range, the water-insoluble pigment dispersing resin does not dissolve in the aqueous inkjet ink, and unevenness of the pigment dispersing resin inside the ink layer (III) is also suppressed. Therefore, cohesive fracture of the ink layer (III) can be suppressed. In addition, when the water-insoluble pigment dispersing resin is combined with the pretreatment layer (II), interaction with an aggregating agent can suitably occur, and therefore a laminated body having excellent clearness without mixed color bleeding or color unevenness can be obtained. The acid value of the water-insoluble pigment dispersing resin used in the method (4) is more preferably 3 to 60 mgKOH/g, and still more preferably 5 to 50 mgKOH/g because the above-described effect is more suitably exhibited.

Note that, when a pigment dispersion containing a pigment coated with a water-insoluble resin is manufactured using the above method C, the acid value of the water-soluble pigment dispersing resin before the crosslinking treatment is preferably 80 to 400 mgKOH/g, more preferably 120 to 375 mgKOH/g, and particularly preferably 150 to 350 mgKOH/g. By adjusting the acid value of the water-soluble pigment dispersing resin before the crosslinking treatment to fall within the above range, the acid value of the water-insoluble pigment dispersing resin after the crosslinking treatment can be easily adjusted to fall within the above range, and the above-described suppression of cohesive fracture and the above-described improvement of printed image quality of a laminated body when the pigment dispersing resins are combined with the pretreatment layer (II) can be achieved. Furthermore, an adsorption amount to a pigment surface after the dispersion treatment can be made uniform when interaction between pigment dispersing resin molecules is suitable. As a result, the printed image quality of the laminated body can be further improved, and the storage stability of the aqueous inkjet ink can be improved.

Note that a method for calculating and measuring the acid value of the pigment dispersing resin is the same to that in the case of the other resin (IIR) described above.

The type of the pigment dispersing resin is not particularly limited, and for example, a (meth)acrylic resin, an (anhydrous) maleic acid resin, a styrene-(anhydrous) maleic acid copolymer resin, an olefin-(anhydrous) maleic acid copolymer resin, a urethane resin, a polyester resin, and a polyolefin resin can be used. Among these resins, it is particularly preferable to use a (meth)acrylic resin, a urethane resin, or a polyester resin from the viewpoint of enlarging material selectivity and ease of synthesis. In addition, these pigment dispersing resins can be synthesized by a known method or a commercially available product can be used. Note that, in the present description, "(anhydrous) maleic acid" represents maleic acid and maleic anhydride.

In one embodiment, the pigment dispersing resin preferably contains an aromatic ring structure. According to this embodiment, the aromatic ring contained in the pigment dispersing resin and a nitrogen atom in a urethane bond contained in the non-solvent adhesive composition, described later, form a $\pi$-cation interaction, and correlation peeling between the ink layer (III) and the adhesive layer (IV) can be suppressed. In addition, dispersion stability of the pigment in the aqueous inkjet ink can be ensured and improved. Furthermore, when the pigment dispersing resin is combined with the pretreatment layer (II), it suppresses the occurrence of excessive aggregation and it is possible to prevent color unevenness and voids in a solid image or the like. The amount of the aromatic ring structure is preferably 10 to 80% by mass, more preferably 15 to 75% by mass, and particularly preferably 20 to 70% by mass with respect to the total amount of the pigment dispersing resin. By adjusting the amount of the aromatic ring structure to fall within the above range, the effect of suppressing the correlation peeling using the $\pi$-cation interaction and the effect of ensuring and improving the dispersion stability of the pigment are suitable. Note that the "amount of the aromatic ring structure" is a mass ratio of a monomer having an aromatic ring structure with respect to the total amount of monomers forming the pigment dispersing resin.

The pigment dispersing resin preferably contains an alkyl group having 8 to 30 carbon atoms in addition to the aromatic ring structure. This is because by selecting the number of carbon atoms of the alkyl group to 8 to 30, it is possible to simultaneously achieve lowering the viscosity of the pigment dispersion, stabilization of the dispersion, suppression of cohesive fracture of the ink layer (III), and further improvement of printed image quality. Note that the number of carbon atoms of the alkyl group is preferably 12 to 24, and more preferably 18 to 22. The alkyl group may be a linear alkyl group or a branched alkyl group as long as it has 8 to 30 carbon atoms. In particular, when the number of carbon atoms is large (specifically, the number of carbon atoms is 12 or more), the alkyl group is preferably a linear alkyl group. When the number of carbon atoms is small (specifically, the number of carbon atoms is 11 or less), the alkyl group is preferably a branched alkyl group (for example, an isooctyl group, a 2-ethylhexyl group, an isononyl group, or an isodecyl group).

In one embodiment, the pigment dispersing resin suitably contains an alkylene oxide group in addition to the aromatic ring structure. By introducing the alkylene oxide group, the hydrophilicity or hydrophobicity of the pigment dispersing resin can be arbitrarily adjusted, and the dispersion stability of the pigment can be improved. In addition, since the pigment dispersing resin can be uniformly present in the ink layer (III), cohesive fracture of the ink layer (III) can be suppressed.

When a water-soluble resin is used as the pigment dispersing resin, it is preferable to neutralize the acid group in the pigment dispersing resin with a base in order to increase solubility thereof in the ink. However, when a base is excessively added, the aggregating agent in the pretreatment liquid layer (II) is neutralized, and a sufficient effect cannot be exhibited. Therefore, it is necessary to pay attention to the addition amount of the base. Whether or not the addition amount of the base is excessive can be confirmed, for example, by preparing a 10% by mass aqueous solution of the water-soluble pigment dispersing resin and measuring the pH of the aqueous solution. In one embodiment, in order to sufficiently exhibit the function of the pretreatment liquid, the pH of the aqueous solution is preferably 7 to 11, and more preferably 7.5 to 10.5.

Note that, in the present description, the pH is a value at 25°C. The pH can be measured using a conventionally known method, for example, with a tabletop pH meter F-72 manufactured by HORIBA, Ltd., using a standard ToupH electrode or a sleeve ToupH electrode.

Examples of the base for neutralizing the pigment dispersing resin include: an alkanolamine such as dimethylethanolamine, diethanolamine, triethanolamine, or N-methyldiethanolamine; ammonia water; an alkali metal hydroxide such as lithium hydroxide, sodium hydroxide, or potassium hydroxide; and an alkali metal carbonate such as sodium carbonate, sodium hydrogen carbonate, or potassium carbonate.

The weight average molecular weight of the pigment dispersing resin is preferably within a range of 1,000 to 200,000, and more preferably within a range of 5,000 to 100,000. When the weight average molecular weight is within the above range, the pigment is stably dispersed in water, and when it is applied to the aqueous inkjet ink, it is easy to adjust the viscosity. In particular, when the weight average molecular weight is 1,000 or more, the pigment dispersing resin does not dissolve in a water-soluble organic solvent or the like present in the aqueous inkjet ink, and therefore dispersion stability is excellent. When the weight average molecular weight is 200,000 or less, the viscosity of the pigment dispersion and the aqueous inkjet ink can be kept low, and the discharge stability from an inkjet head is excellent, enabling stable printing over a long period of time.

Note that, in the present description, the weight average molecular weight of the resin is a polystyrene equivalent value that can be measured, for example, by a method in accordance with JIS K 7252. Specific examples of the measurement method include a method in which measurement is performed using a GPC measurement apparatus (HLC-8120GPC manufactured by Tosoh Corporation) equipped with a TSKgel column manufactured by Tosoh Corporation and an RI detector, and using THF as a developing solvent.

When a pigment dispersing resin having no function as a binder resin is used, a blending amount of the pigment dispersing resin is preferably 1 to 50% by mass with respect to the pigment. By setting the blending amount of the pigment dispersing resin to 1 to 50% by mass with respect to the pigment, the viscosity of the pigment dispersion can be kept low, and the viscosity stability and dispersion stability of the pigment dispersion or the aqueous inkjet ink are improved. When the pigment dispersing resin and the pretreatment liquid are used in combination, it causes lowering of the dispersion function and a laminated body excellent in printed image quality is obtained. In this case, a ratio of the content of the pigment dispersing resin to the content of the pigment is more preferably 2 to 45% by mass, still more preferably 3 to 40% by mass, and most preferably 4 to 35% by mass.

Meanwhile, when a pigment dispersing resin having a function as a binder resin is used, the blending amount of the pigment dispersing resin is preferably 50 to 250% by mass with respect to the pigment. By adjusting the blending amount of the pigment dispersing resin to fall within the above range, not only the viscosity stability and dispersion stability, and the improvement in printed image quality described above can be achieved, but also cohesive fracture of the ink layer (III) can be suppressed and abrasion resistance can be improved as described later. Note that the blending amount is more preferably 70 to 220% by mass, and particularly preferably 80 to 200% by mass from the viewpoint of further improving these effects.

<Binder resin>

As described above, a water-soluble resin and resin particles are generally known as a form of a resin. The aqueous inkjet ink used for forming the ink layer (III) forming the laminated body of the present embodiment may contain a binder resin. As the binder resin, a water-soluble resin may be used, as well as resin particles may be used, or both may be used in combination. In addition, there are hydrosol and emulsions as a form of resin particles, and when they are used as the binder resin, either may be used. Note that, in the present description, the "emulsion" refers to a form in which an emulsifier is adsorbed and/or bonded to a surface of resin particles and dispersed in a dispersion medium. The "hydrosol" refers to a form in which an acidic and/or basic functional group present in a resin is neutralized and dispersed in a dispersion medium without using an emulsifier.

Since the emulsion can contain a resin having a large weight average molecular weight, can reduce the viscosity of the aqueous inkjet ink, and can blend a larger amount of resin in the aqueous inkjet ink, the emulsion is suitable for enhancing abrasion resistance and cohesive fracture suppressing property of a printed matter of the ink layer (III) and blocking resistance of the laminated body.

When a hydrosol and/or a water-soluble resin is used, it is preferable to use a resin having a weight average molecular weight in a range of 10,000 or more and 80,000 or less, and it is more preferable to use a resin having a weight average molecular weight of 20,000 or more and 50,000 or less. It is preferabale when the weight average molecular weight is 10,000 or more, as the abrasion resistance and the cohesive fracture suppressing property of a printed matter can be made suitable. It is also preferable when the weight average molecular weight is 80,000 or less, as discharge stability from an inkjet head can be maintained in a suitable state.

The type of resin used as the binder resin is not particularly limited, and examples thereof include a (meth)acrylic resin, a urethane resin, a (meth)acrylic-urethane resin, a vinyl chloride resin, a polyolefin resin, and a polyester resin.

Also in the case of the binder resin, it is preferable to contain an aromatic ring structure as in the case of the pigment dispersing resin. The aromatic ring and a nitrogen atom in a urethane bond contained in a non-solvent adhesive composition described later thereby form a $\pi$-cation interaction, and correlation peeling between the ink layer (III) and the adhesive layer (IV) can be suitably suppressed. The interaction between the aromatic rings increases the strength of the ink layer (III), and can also suppress the cohesive fracture of the ink layer (III). The amount of the aromatic ring structure is preferably 3 to 50% by mass, more preferably 5 to 40% by mass, and particularly preferably 7 to 35% by mass with respect to the total amount of the binder resin. By adjusting the amount of the aromatic ring structure to fall within the above range, it is possible to suppress correlation peeling using π-cation interaction and to reduce the cohesive fracture of the ink layer (III) without excessively increasing the viscosity of the aqueous inkjet ink.

The content of the binder resin in the total amount of the aqueous inkjet ink is preferably within a range of 1% by mass or more and 20% by mass or less, more preferably within a range of 2% by mass or more and 15% by mass or less, and particularly preferably within a range of 3% by mass or more and 10% by mass or less as solid content from the viewpoint of suitably exhibiting the effect by blending the binder resin described above.

<Surface additive>

The aqueous inkjet ink of the present embodiment uses a surface additive for the purpose of improving printed image quality by adjusting surface tension thereof to ensure wettability on the non-permeable substrate (I) and the pretreatment layer (II). Meanwhile, when an excessive amount of the surface additive is added and surface tension may be too low, or when a specific type of surface additive is used, the nozzle surface of an inkjet head is wetted with the aqueous inkjet ink, and not only may the discharge stability be impaired, but also the adhering force between the ink layer (III) and the adhesive layer (IV) and the same between the adhesive layer (IV) and the deposited film (V) may be adversely affected.

In the aqueous inkjet ink of the present embodiment, a siloxane-based and/or acetylene diol-based surface additive is used as the surface additive from the viewpoint of solving the above problems and exhibiting a favorable adhering force. Although the cause thereof is unknown, the following can be presumed. For example, since the siloxane-based and/or acetylene diol-based surface additive has a suitable orientation speed to an interface as compared with other surface additives, a uniform adhesive layer (IV) can be formed without repelling the adhesive composition applied later; since the siloxane-based and/or acetylene diol-based surface additive has high affinity with other layers, it is difficult for the siloxane-based and/or acetylene diol-based surface additive to affect the adhering force to an adjacent layer; and the adhering force is reinforced by chemical interaction via the siloxane-based and/or acetylene diol-based surface additive.

In the present invention, a transparent deposited film on which silica and/or alumina are deposited is used as the deposited film (V). However, as described above, the transparent deposited film has a problem where cracking occurs on the surface of the silica and/or alumina deposited layer due to bending or the like, and thus the barrier property of oxygen, water vapor, or the like is deteriorated. On the other hand, in the embodiment of the present invention, the above-described problem is solved by blending a certain amount of a siloxane-based surface additive and/or an acetylene diol-based surface additive in the ink layer (III). Although the principle thereof is not clear, it is considered that part of the siloxane-based surface additive and/or the acetylene diol-based surface additive in the ink layer (III) bleeds to the silica and/or alumina deposited layer via the adhesive layer (IV). The siloxane-based surface additive and/or the acetylene diol-based surface additive is considered to suppress occurrence of cracking and prevent deterioration of the barrier property of oxygen, water vapor, or the like.

As mentioned above, the content of the siloxane-based and/or acetylene diol-based surface additive per unit area of the ink layer (III) may be 1 to 500 $mg/m^2$ for achieving favorable printed image quality, suppressing delamination between layers, and maintaining a gas barrier property. The content is more preferably 1 to 480 $mg/m^2$, still more preferably 25 to 450 $mg/m^2$, and most preferably 100 to 400 $mg/m^2$. When the content of the surface additive contained in the ink layer (III) is within the above range, not only printed image quality is improved, but also affinity between the adhesive layer (IV) and the ink layer (III) is improved without repelling the adhesive composition. In addition, the amount of the surface additive bleeding into the silica and/or alumina deposited layer in the deposited film (V) becomes suitable, thus, the cracking can be suppressed, and a favorable gas barrier property is obtained. Furthermore, for example, even when the laminated body is stored as a packaging material for a long period of time, it is possible to suppress deterioration of the adhering force between the ink layer (III) and the adhesive layer (IV) and the same between the adhesive layer (IV) and the deposited film (V).

In the present description, the "surface additive" refers to a compound having a hydrophilic moiety and a hydrophobic moiety in a molecular structure thereof, and capable of adjusting surface tension of an added aqueous inkjet ink. For example, when a difference in surface tension is 3 mN/m or more between an aqueous inkjet ink to which a target compound is added in an amount of 1.0% by mass as an outer percentage and an aqueous inkjet ink to which the compound is not added, the compound can be a preferable surface additive in one embodiment. Note that the same applies to the surface additive contained in the pretreatment liquid described above.

Examples of the acetylene diol-based surface additive include 2,4,7,9-tetramethyl-5-decyne-4,7-diol, 2,5,8,11-tetramethyl-6-dodecyne-5,8-diol, hexadeca-8-yne-7,10-diol, 6,9-dimethyl-tetradeca-7-yne-6,9-diol, 7,10-dimethylhexadeca-8-yne-7,10-diol, and ethylene oxide and/or propylene oxide adducts thereof, but are not limited thereto. Among these compounds, one or more selected from the group consisting of 2,4,7,9-tetramethyl-5-decyne-4,7-diol, an ethylene oxide adduct of 2,4,7,9-tetramethyl-5-decyne-4,7-diol, 2,5,8,11-tetramethyl-6-dodecyne-5,8-diol, and an ethylene oxide adduct of 2,5,8,11-tetramethyl-6-dodecyne-5,8-diol can be particularly suitably used from the viewpoint of obtaining a laminated body that does not cause delamination and has a favorable gas barrier property. Note that these acetylene diol-based surface additives may be used singly or in combination of two or more types thereof.

Examples of the siloxane-based surface additive include: 8032ADDITIVE, FZ-2104, FZ-2120, FZ-2122, FZ-2162, FZ-2164, FZ-2166, FZ-2404, FZ-7001, FZ-7002, FZ-7006, L-7001, L-7002, SF8427, SF8428, SH3748, SH3749, SH3771M, SH3772M, SH3773M, SH3775M, and SH8400 manufactured by Dow Corning Toray Co., Ltd.; BYK-331, BYK-333, BYK-345, BYK-346, BYK-347, BYK-348, BYK-349, BYK-UV3500, BYK-UV3510, BYK-UV3530, and BYK-UV3570 manufactured by BYK Japan KK; TEGO Wet 240, TEGO Wet 250, TEGO Wet 260, TEGO Wet 270, TEGO Wet 280, TEGO Glide 410, TEGO Glide 432, TEGO Glide 435, TEGO Glide 440, TEGO Glide 450, TEGO Twin 4000, and TEGO Twin4100 manufactured by Evonik Industries AG; KF-351A, KF-352A, KF-353, KF-354L, KF-355A, KF-615A, KF-640, KF-642, KF-643, KF-644, KF-945, KF-6011, KF-6012, KF-6015, KF-6017, KF-6020, KF-6204, and X-22-4515 manufactured by Shin-Etsu Chemical Co., Ltd.; and SILFACE SAG series manufactured by Nissin Chemical Industry Co., Ltd. In particular, a siloxane-based surface additive in which one or more ethylene oxide groups and/or propylene oxide groups are introduced into a side chain and/or both terminals of a polydimethylsiloxane chain can be suitably used, and a siloxane-based surface additive in which an ethylene oxide group and/or a propylene oxide group are introduced at least into the side chain can be particularly suitably used. These siloxane-based surface additives may be used singly or in combination of two or more types thereof.

The siloxane-based surface additive and the acetylene diol surface additive are suitably not very large molecules from the viewpoints of its orientation speed to the interface and bleeding to the deposited film (V) described above. Specifically, it is preferable to select a surface additive having a molecular weight of 100 to 5,000, it is more preferable to select a surface additive having a molecular weight of 180 to 3,000, and it is particularly preferable to select a surface additive having a molecular weight of 220 to 2,000. The size of the molecule can also be expressed by viscosity. Specifically, it is preferable to select a surface additive having a kinematic viscosity at 25°C of 10 to 450 mm$^2$/s, it is more preferable to select a surface additive having a kinematic viscosity at 25°C of 20 to 400 mm$^2$/s, and it is particularly preferable to select a surface additive having a kinematic viscosity at 25°C of 40 to 300 mm$^2$/s. By using the siloxane-based surface additive and the acetylene diol surface additive having the above-described molecular weight or kinematic viscosity, the adhering force to the adjacent layer is improved, and a laminated body that hardly causes delamination is obtained. **In** addition, a laminated body that does not cause the delamination mentioned above and also maintains a favorable gas barrier property even after application of an action such as stretching and shrinking or after long-term storage is obtained. Note that the kinematic viscosity can be measured using, for example, an Ubbelohde viscometer.

When the siloxane-based surface additive and the acetylene diol surface additive are used in combination, the content of the siloxane-based surface additive is preferably 20 to 500% by mass, more preferably 25 to 400% by mass, and particularly preferably 35 to 300% by mass with respect to 100% by mass of the content of the acetylene diol surface additive. Although a detailed reason therefor is unknown, by setting the content ratio within the above range, a laminated body excellent in printed image quality is obtained without impairing the delamination suppressing property or the maintaining property of the gas barrier property.

**In** the aqueous inkjet ink of the present embodiment, a surface additive other than the siloxane-based surface additive and the acetylene diol surface additive may be used as long as printed image quality, discharge stability, and a closely adhering force with an adjacent layer are not impaired. Examples of the surface additive other than the siloxane-based surface additive and the acetylene diol surface additive include an acrylic surface additive, a fluorine-based surface additive, and a polyoxyalkylene alkyl ether-based surface additive.

The total amount of the surface additives to be added is preferably 0.05% by mass or more and 5% by mass or less, and more preferably 0.1% by mass or more and 3% by mass or less with respect to the total amount of the aqueous inkjet ink. By setting the total amount of the surface additives to 0.05% by mass or more, the function of the surface additive described above can be sufficiently exhibited. By setting the total amount of the surface additives to 5% by mass or less, the storage stability and the discharge stability of the aqueous inkjet ink can be maintained at suitable levels.

<Water-soluble organic solvent>

The aqueous inkjet ink used in manufacturing the laminated body of the present embodiment preferably contains a water-soluble organic solvent. The aqueous inkjet ink containing a water-soluble organic solvent is excellent in wettability to the non-permeable substrate (I) and the pretreatment layer (II), and thus is excellent in clearness and visibility, provides a printed image without voids in a solid part or the like, and thus can suppress delamination from an adjacent layer. Furthermore, since the pigment dispersing resin can be uniformly present in the aqueous inkjet ink containing a water-soluble organic solvent, the aqueous inkjet ink containing a water-soluble organic solvent can also suppress cohesive fracture of the ink layer (III). In addition, the aqueous inkjet ink containing a water-soluble organic solvent can make the storage stability of the aqueous inkjet ink suitable, and as a result, the discharge stability is also improved. Note that, in the present application, the "water-soluble organic solvent" refers to an organic solvent having a solubility of 1% by mass or more in water at 25°C.

The type of the water-soluble organic solvent contained in the aqueous inkjet ink is not particularly limited, and conventionally known water-soluble organic solvents can be arbitrarily used. In particular, it is preferable to use a water-soluble organic solvent containing one or more hydroxyl groups in a molecular structure thereof, and it is particularly preferable to use a glycol monoether-based solvent and/or a polyol-based solvent from the viewpoint of compatibility and affinity with the surface additive and components such as the pigment dispersing resin and the binder resin, that are to be added as necessary. In these water-soluble organic solvents, delamination between the adhesive layer (IV) and the ink layer (III) can also be suppressed by reaction between a hydroxyl group and a polyisocyanate component in a non-solvent adhesive composition described later.

Examples of the glycol monoether-based solvent suitably used include diethylene glycol monomethyl ether, diethylene glycol monoethyl ether, diethylene glycol monopropyl ether, diethylene glycol monoisopropyl ether, diethylene glycol monobutyl ether, diethylene glycol monoisobutyl ether, diethylene glycol monohexyl ether, diethylene glycol monoisohexyl ether, diethylene glycol mono-2-ethylhexyl ether, triethylene glycol monomethyl ether, triethylene glycol monoethyl ether, triethylene glycol monobutyl ether, triethylene glycol monoisobutyl ether, tetraethylene glycol monomethyl ether, tetraethylene glycol monoethyl ether, tetraethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monoethyl ether, and tripropylene glycol monobutyl ether.

Examples of the polyol-based solvent suitably used include: alkanediols such as 1,2-ethanediol (ethylene glycol), 1,2-propanediol (propylene glycol), 1,3-propanediol, 1,2-butanediol, 1,3-butanediol, 1,4-butanediol, 2,3-butanediol, 1,2-pentanediol, 1,5-pentanediol, 1,2-hexanediol, 2,2-dimethyl-1,3-propanediol, 2-methyl-1,3-propanediol, 2-ethyl-2-methyl-1,3-propanediol, 3-methyl-1,3-butanediol, 3-methyl-1,5-pentanediol, 2-methyl-2-propyl-1,3-propanediol, 2-methylpentane-2,4-diol, and 2-ethyl-1,3-hexanediol; polyalkylene glycols such as diethylene glycol and dipropylene glycol; and other polyols such as glycerin, 1,2,4-butanetriol, and 1,2,6-hexanetriol.

Among these solvents, it is preferable to select 1,2-propanediol, 1,2-butanediol, 1,3-butanediol, 2,3-butanediol, 1,2-pentanediol, 1,5-pentanediol, 1,2-hexanediol, diethylene glycol monopropyl ether, propylene glycol monoethyl ether, propylene glycol monopropyl ether, dipropylene glycol monopropyl ether, and dipropylene glycol monobutyl ether from the viewpoint of achieving excellent discharge stability, moisture retention property, and drying property of the aqueous inkjet ink, and satisfy both the printed image quality of the laminated body and the prevention of delamination from an adjacent layer.

In addition to the compounds listed above, as the water-soluble organic solvent, monool-based solvents such as ethanol, n-propanol, isopropanol, n-butanol, isobutanol, t-butanol, 3-methoxy-1-butanol, and 3-methoxy-3-methyl-1-butanol; glycol diethers such as diethylene glycol diethyl ether, diethylene glycol ethyl methyl ether, diethylene glycol isopropyl methyl ether, diethylene glycol butyl methyl ether, triethylene glycol dimethyl ether, triethylene glycol butyl methyl ether, and tetraethylene glycol dimethyl ether; a pyrrolidone-based solvent such as 2-pyrrolidone, N-methyl-2-pyrrolidone, N-ethyl-2-pyrrolidone, or 1-(2-hydroxyethyl)-2-pyrrolidone; an alkanolamine-based solvent such as dimethylethanolamine, 2-amino-2-methyl-1-propanol, diethanolamine, or triethanolamine; and the like can be used. Note that, among the compounds listed above, the pyrrolidone-based solvent and the alkanolamine-based solvent are compounds that also function as a pH adjuster of the aqueous inkjet ink as in the case of the pretreatment liquid described above.

A boiling point of the water-soluble organic solvent at 1 atm is preferably 100°C or higher and 240°C or lower. By using a water-soluble organic solvent having a boiling point of 100°C or higher, discharge stability, dispersion stability, and moisture retention property of the aqueous inkjet ink are improved. By using a water-soluble organic solvent having a boiling point of 240°C or lower, drying property of the aqueous inkjet ink is improved. In addition, it is possible to prevent mixed color bleeding in the laminated body, to improve blocking resistance, and to suppress delamination from an adjacent layer and cohesive fracture of the ink layer (III). Note that the boiling point at 1 atm can be measured by using a thermal analyzer, such as a differential scanning calorimetry (DSC).

The total amount of the water-soluble organic solvents contained in the aqueous inkjet ink used for manufacturing the laminated body of the present embodiment is preferably 3 to 40% by mass with respect to the total amount of the aqueous inkjet ink (A). Furthermore, the total amount of the water-soluble organic solvents is more preferably 5 to 35% by mass, and particularly preferably 8 to 30% by mass from the viewpoints of improving discharge stability from an inkjet head and suppressing delamination from an adjacent layer. By setting the total amount of the water-soluble organic solvents to 3% by mass or more, an aqueous inkjet ink excellent in moisture retention property and discharge stability is obtained. Furthermore, wettability to the non-permeable substrate (I) and the pretreatment layer (II) is improved, and therefore delamination from these layers can be suppressed. By setting the total content of the water-soluble organic solvents to 40% by mass or less, the drying property is improved, and mixed color bleeding and blocking resistance of the laminated body can be prevented.

<Other components>

In addition to the components described above, additives such as a crosslinking agent, a thermal polymerization initiator, an infrared absorber, an ultraviolet absorber, a preservative, and a thickener can be appropriately added to the aqueous inkjet ink as necessary. The addition amount of these additives is suitably 0.01 to 10% by mass with respect to the total mass of the aqueous inkjet ink.

<Adhesive layer (IV)>

The adhesive layer (IV) forming the laminated body of the present embodiment is a layer obtained by applying an adhesive composition onto the ink layer (III) and/or the deposited film (V) to form an adhesive layer precursor, and subsequently drying and/or curing the adhesive layer precursor. As the adhesive composition, for example, a non-solvent adhesive composition containing a polyisocyanate component and a polyol component, and a drying adhesive composition containing a heat-fusible resin and a liquid component can be used.

<Non-solvent adhesive composition>

The non-solvent adhesive composition does not require use of a dryer. In addition, the non-solvent adhesive composition does not substantially contain a solvent, and therefore also has an advantage that deterioration of printed image quality of the ink layer (III) due to the solvent does not occur.

<Polyisocyanate component>

As the polyisocyanate component, an aromatic isocyanate compound is preferably used. The aromatic isocyanate compound has higher reactivity than an aliphatic isocyanate compound and an alicyclic isocyanate compound. As a result, delamination between the adhesive layer (IV) formed using the non-solvent adhesive composition and the ink layer (III) and the same between the adhesive layer (IV) and the deposited film (V) can be suppressed. When the aqueous inkjet ink used for manufacturing the ink layer (III) contains a resin (particularly, when the resin has an aromatic ring structure), the non-solvent adhesive composition containing an aromatic isocyanate compound has high affinity with the resin, and it is further considered that $\pi$ electrons in the aromatic ring structure present in the aromatic isocyanate compound form intermolecular interaction with the ink layer (III). This also makes it possible to firmly prevent delamination between the ink layer (III) and the adhesive layer (IV). Furthermore, it is possible to suppress occurrence of cracking in the deposited layer present in the deposited film (V) without excessively suppressing the bleeding of the siloxane-based surface additive and/or the acetylene diol-based surface additive contained in the ink layer (III), and to prevent deterioration of the gas barrier property.

Specific examples of the aromatic isocyanate compound include m-phenylene diisocyanate, p-phenylene diisocyanate, 4,4'-diphenylmethane diisocyanate, 2,4'-diphenylmethane diisocyanate, 2,2'-diphenylmethane diisocyanate, 2,4-tolylene diisocyanate, 2,6-tolylene diisocyanate, dialkyldiphenylmethane diisocyanate, tetraalkyldiphenylmethane diisocyanate, 3,3'-dimethyl-4,4'-biphenylene diisocyanate, 3,3'-dimethoxy-4,4'-biphenylene diisocyanate, naphthaline-1,5-diisocyanate, tetrahydronaphthylene-1,5-diisocyanate, 4,4-dibenzyl isocyanate, xylene diisocyanate, and tetramethylxylylene diisocyanate. The aromatic isocyanate compound preferably contains one or more selected from the group consisting of 4,4'-diphenylmethane diisocyanate, 2,4'-diphenylmethane diisocyanate, 2,2'-diphenylmethane diisocyanate, dialkyldiphenylmethane diisocyanate, and tetraalkyldiphenylmethane diisocyanate (the above compounds are also collectively referred to as "diphenylmethane diisocyanate"), 2,4-tolylene diisocyanate, and 2,6-tolylene diisocyanate (the above compounds are also collectively referred to as "tolylene diisocyanate") because a laminated body that has a better appearance without impairing printed image quality and does not cause delamination or cohesive fracture of the adhesive layer (IV) is easily obtained.

A ratio of the aromatic isocyanate compound contained in the non-solvent adhesive composition is preferably 5 to 70% by mass with respect to the total amount of the non-solvent adhesive composition. By setting the content of the aromatic isocyanate compound within the above range, coating appearance of the ink layer in the laminated body is improved, and in addition, delamination from an adjacent layer can be suppressed. The ratio is more preferably 10 to 60% by mass, and still more preferably 15 to 50% by mass. Also, in one embodiment, the content of the aromatic isocyanate compound contained per unit area of the adhesive layer (IV) is preferably 0.05 to 2.0 $g/m^2$, and particularly preferably 0.1 to 2.0 $g/m^2$. Such an embodiment is preferable from the viewpoint that bleeding of the siloxane-based surface additive and/or the acetylene diol-based surface additive contained in the ink layer (III) is not excessively suppressed, and even after storage as a packaging container for a long period of time, the occurrence of cracking in the deposited layer present in the deposited film (V) is suppressed, and the deterioration of a gas barrier property is prevented, and further, from the viewpoint that a laminated body also excellent in recyclability is obtained.

Note that, when the non-solvent adhesive composition contains an aromatic isocyanate compound, where the "amount of the aromatic isocyanate compound" refers to the mass of the aromatic isocyanate compound. When the non-solvent adhesive composition contains a polymer, the "amount of the aromatic isocyanate compound" is a value obtained by multiplying the mass ratio of the amount of the aromatic isocyanate compound with respect to the total amount of monomers forming the polymer by the content of the polymer.

Note that, as the aromatic isocyanate compound, an adduct and/or isocyanurate obtained from the aromatic isocyanate compound may be used. Here, the "adduct" is an adduct of an aromatic isocyanate compound and trimethylolpropane, and the "isocyanurate" is a trimer of an aromatic isocyanate compound.

As the aromatic polyisocyanate compound, a polyisocyanate which is a reaction product of the aromatic isocyanate compound listed above and a polyol and has a terminal isocyanate group thereof may be used. In this case, it is preferable to use a polyether polyol or a polyester polyol as the polyol. Compatibility with a polyol component described later is thereby improved, and cohesive fracture of the adhesive layer (IV) can be prevented. As a result, an applying property of the non-solvent adhesive composition is improved, leading to suppression of delamination and cohesive fracture in the laminated body. Note that it is particularly preferable to use a polyether polyol as the polyol.

Examples of the polyether polyol include compounds obtained by polymerizing an oxirane compound such as ethylene oxide, propylene oxide, butylene oxide, or tetrahydrofuran using water, ethylene glycol, propylene glycol, trimethylolpropane, glycerin, or the like as an initiator. **In** addition, a plurality of oxirane compounds having different numbers of functional groups can be used in combination. As the polyether polyol, a polyether polyol having a number average molecular weight of 100 or more and 5,000 or less is preferably used.

Examples of the polyester polyol include compounds obtained by the reaction between a polyvalent carboxylic acid component and a glycol component. Examples of the polyvalent carboxylic acid component include: a polyvalent carboxylic acid such as terephthalic acid, isophthalic acid, adipic acid, sebacic acid, or dialkyl esters thereof, and mixtures thereof. Examples of the glycol component include glycols such as ethylene glycol, propylene glycol, diethylene glycol, butylene glycol, neopentyl glycol, 1,6-hexanediol, 3-methyl-1,5-pentanediol, polyoxyethylene glycol, polyoxypropylene glycol, and polytetramethylene ether glycol, and mixtures thereof.

As the aromatic polyisocyanate compound, a reaction product of the aromatic isocyanate compound listed above with a low molecular weight diol such as ethylene glycol, propylene glycol, diethylene glycol, butylene glycol, neopentyl glycol, 1,6-hexanediol, 3-methyl-1,5-pentanediol, or 2-methyl-1,3-propanediol can also be used.

The number average molecular weight of the polyisocyanate component as a whole is preferably 200 to 1,500, more preferably 250 to 1,200, and particularly preferably 300 to 800. Note that when a plurality of polyisocyanate compounds is contained as the polyisocyanate component, the "number average molecular weight of the polyisocyanate component as a whole" refers to a weighted average value of the number average molecular weights of the polyisocyanate compounds. As described above, for example, when a reaction product of an aromatic isocyanate compound and a polyether polyol is used as the polyisocyanate component, the number average molecular weight of the polyether polyol is preferably 100 or more and 5,000 or less. **In** this case, it is suitable to adjust the number average molecular weight as a whole to fall within the above range by using an aromatic isocyanate compound having a small molecular weight in combination with the reaction product.

As the polyisocyanate component, the polyisocyanate compounds exemplified above may be used singly or in combination of two or more types thereof. When two or more types of polyisocyanate compounds are used, one or more of the polyisocyanate compounds are suitably aromatic polyisocyanate compounds.

<Polyol component>

Next, the polyol component contained in the non-solvent adhesive composition will be described.

As the polyol component, for example, polymer polyols such as a polyether polyol, a polyester polyol, a polyether ester polyol, a polycarbonate polyol, a polyurethane polyol, a polyester amide polyol, and an acryl polyol (each of which has a terminal hydroxyl group thereof); low molecular weight diols such as ethylene glycol, propylene glycol, diethylene glycol, butylene glycol, neopentyl glycol, 1,6-hexanediol, and 3-methyl-1,5-pentanediol; and low molecular weight triols such as trimethylolpropane and glycerin can be used. Among these compounds, the polyol component preferably contains one or more polymer polyols selected from the group consisting of a polyester polyol, a polyether polyol, and a polyether ester polyol from the viewpoints of not impairing printed image quality, having a better appearance, and preventing delamination from an adjacent layer.

Examples of the polyester polyol (having a terminal hydroxyl group thereof) include: reaction products of a polyvalent carboxylic acid such as terephthalic acid, isophthalic acid, adipic acid, azelaic acid, or sebacic acid, a dialkyl ester thereof, or a mixture thereof with glycols such as ethylene glycol, propylene glycol, diethylene glycol, butylene glycol, neopentyl glycol, 1,6-hexanediol, 3-methyl-1,5-pentanediol, polyoxyethylene glycol, polyoxypropylene glycol, and polytetramethylene ether glycol, or mixtures thereof; and ring-opening polymerization reaction products of lactones such as polycaprolactone, polyvalerolactone, and poly($\beta$-methyl-$\gamma$-valerolactone). As the polyester polyol, a vegetable oil such as castor oil, and a polyester compound derived from the vegetable oil can also be used.

Furthermore, a product obtained by reaction between some of hydroxyl groups in the polyester polyol exemplified above and an acid anhydride such as trimellitic anhydride can also be used. By using a polyester polyol to which an acid anhydride is added, delamination from an adjacent layer and cohesive fracture of the adhesive layer (IV) can be prevented. Note that when trimellitic anhydride is added, the amount of trimellitic anhydride used is preferably 0.1 to 5% by mass with respect to 100% by mass of polyester polyol before the reaction.

Meanwhile, examples of the polyether polyol (having a terminal hydroxyl group thereof) include a compound obtained by polymerizing an oxirane compound, such as ethylene oxide, propylene oxide, butylene oxide, or tetrahydrofuran, using water or a low molecular weight polyol, such as ethylene glycol, propylene glycol, trimethylolpropane, or glycerin as an initiator.

Examples of the polyether ester polyol include compounds obtained by reaction between a dibasic acid, such as terephthalic acid, isophthalic acid, adipic acid, azelaic acid, or sebacic acid, a dialkyl ester thereof, or a mixture thereof, and the polyether diol.

In a case with the non-solvent adhesive composition used in manufacturing of the laminated body of the present embodiment, the number average molecular weight of the polyol component is preferably 300 to 5,000, and more preferably 500 to 3000.

As the polyol component, the polyols exemplified above may be used singly or in combination of two or more types thereof. In particular, the non-solvent adhesive composition to be used in manufacturing of the laminated body of the present embodiment preferably contains two or more types of polyols having different number average molecular weights as the polyol component. Specifically, for example, the non-solvent adhesive composition suitably contains a polyol having a number average molecular weight of 100 to 500, a polyol having a number average molecular weight of more than 500 and 3,000 or less, and a polyol having a number average molecular weight of more than 3,000 and 10,000 or less, or suitably contains a polyol having a number average molecular weight of 100 to 1,000 and a polyol having a number average molecular weight of more than 1,000 and 10,000 or less. Among these polyols, a polyol having a number average molecular weight of 1,000 or less is excellent in permeability into the ink layer (III) and also has favorable reactivity with the above-described polyisocyanate component, and therefore contributes to suppression of delamination from the ink layer (III). In addition, a polyol having a number average molecular weight of more than 1,000 is effective in increasing a cohesive force of a cured film of the non-solvent adhesive composition, and as a result, contributes to suppression of cohesive fracture of the adhesive layer (IV) and improvement in the gas barrier property of the laminated body.

In the case with the non-solvent adhesive composition that can be used for manufacturing the laminated body of the present embodiment, when the number of moles of hydroxyl groups in a polyol component is 100 moles, the number of moles of isocyanate groups in a polyisocyanate component to be used in combination is preferably 120 moles or more and 300 moles or less. By adjusting the number of moles of isocyanate groups in a polyisocyanate component with respect to the number of moles of hydroxyl groups in a polyol component to fall within the above range, it is possible to obtain a laminated body that suppresses delamination from an adjacent layer and cohesive fracture of the adhesive layer (IV) over a long period of time. For example, even when the laminated body is subjected to aging treatment in a high humidity environment, occurrence of delamination and cohesive fracture can easily be suppressed.

<Acid group-containing component>

The non-solvent adhesive composition to be used in manufacture of the laminated body of the present embodiment suitably contains an acid group-containing component from the viewpoint that the deposited film (V) can be separated and recyclability is improved by an immersion step in a basic solution described later. As the acid group-containing component, for example, dimethylolpropionic acid, dimethylolbutanoic acid, and alkylene oxide adducts of these compounds (these components also serve as the above-described polyol component; a polyether polyol having an acid group; a polyester polyol having an acid group); a (meth)acrylic resin having an acid group and a hydroxyl group; a modified styrene-(anhydrous) maleic acid copolymer resin having a hydroxyl group; and the like can be used.

The acid group-containing component listed above is preferably blended such that the adhesive composition forming the adhesive layer (IV) has an acid value of 1 to 60 mgKOH/g. The acid value is more preferably 2 to 50 mgKOH/g, still more preferably 3 to 40 mgKOH/g, and particularly preferably 5 to 30 mgKOH/g.

Note that a method for calculating and measuring the acid value of the adhesive composition is the same to that in the case of the other resin (IIR) described above.

<Other components>

The non-solvent adhesive composition that can be used for manufacturing the laminated body of the present embodiment can further contain a particle component having an average particle size of 0.1 to 0.4 μm. When a non-solvent adhesive composition containing a particle component having an average particle size within the above range is used, the gas barrier property of the laminated body is enhanced, and a laminated body that has favorable printed image quality and suppressed delamination and cohesive fracture can be obtained even when the laminated body is manufactured at a high speed. Note that the average particle size of the particle component described above can be measured using a same method to that for the average particle size of the metallic inorganic pigment described above.

A compound forming the particle component may be an inorganic compound or an organic compound. For example, when an inorganic compound is contained as the particle component, aluminum oxide, aluminum silicate, alumina white, potassium sulfate, zinc oxide, zinc carbonate, magnesium aluminate metasilicate, magnesium silicate, magnesium carbonate, magnesium hydroxide, barium sulfate, calcium carbonate, calcium hydroxide, calcium oxide, calcium silicate, calcium sulfate, titanium oxide, silica, zeolite, activated carbon, kaolin, talc, agalmatolite clay, silica, mica, graphite, sericite, montmorillonite, sericite, sepiolite, bentonite, pearlite, zeolite, wollastonite, fluorite, and dolomite can be used as the inorganic compound.

When an organic compound is contained as the particle component, the above-described resin particles that can be contained in the aqueous inkjet ink can be suitably used as the organic compound, and resin particles such as a benzoguanamine resin, an epoxy resin, a phenol resin, a fluororesin, a polyimide resin, a polyamide resin, a polyacetal resin, and a cellulose resin may be used. Among those listed above, benzoguanamine resin particles can be suitably used.

The content of the particle component listed above is preferably 0.01 to 10% by mass with respect to 100% by mass of the total amount of a polyisocyanate component and a polyol component. Within the above range, it is possible to obtain a laminated body that has favorable printed image quality and suppressed delamination and cohesive fracture.

A silane coupling agent may be added to the non-solvent adhesive composition. As the silane coupling agent, those having a functional group such as a vinyl group, an epoxy group, an amino group, an imino group, or a mercapto group and a functional group such as a methoxy group or an ethoxy group can be suitably used. Examples of the silane coupling agent that can be suitably used include: a chlorosilane such as vinyltrichlorosilane; an aminosilane such as N-(dimethoxymethylsilylpropyl) ethylenediamine or N-(triethoxysilylpropyl) ethylenediamine; an epoxysilane such as $\gamma$-glycidoxypropyltrimethoxysilane or $\gamma$-glycidoxypropyltriethoxysilane; and a vinylsilanes such as vinyltriethoxysilane. The addition amount of the silane coupling agent is preferably 0.1 to 5% by mass with respect to the total amount of the non-solvent adhesive composition.

**In** addition, in the non-solvent adhesive composition, additives such as an antioxidant, an ultraviolet absorber, a hydrolysis inhibitor, an antifungal agent, a thickener, a plasticizer, a surface additive, a pigment, and a filler can be further used as necessary.

**In** addition, in order to further suppress delamination from an adjacent layer, an auxiliary agent such as a titanate-based coupling agent, phosphoric acid, a phosphoric acid derivative, an acid anhydride, or an adhesive resin can be used. Furthermore, in order to adjust the curing reaction, conventionally known catalysts, additives, and the like can also be used.

When the non-solvent adhesive composition is used for forming the adhesive layer (IV) forming the laminated body of the present embodiment, it is suitable to mix a composition containing a polyisocyanate component and a composition containing a polyol component prepared in advance immediately before use to obtain a non-solvent adhesive composition. When the non-solvent adhesive composition contains the above-described particle component, the particle component is preferably contained in the composition containing a polyol component.

It is preferable to mix a composition containing a polyisocyanate component and a composition containing a polyol component at a temperature as low as possible within a range in which fluidity can be ensured, and specifically, it is preferable to mix them under an environment of 25 to 80°C. Furthermore, the viscosity of the non-solvent adhesive composition immediately after preparation at 60°C is preferably 50 to 5,000 mPa·s, and more preferably 50 to 3,000 mPa·s. When the viscosity at 60°C is 5,000 mPa·s or less, coating on the ink layer (III) and/or the deposited film (V) can be easily performed, ensuring favorable workability, and the coating appearance is also improved. When the viscosity at 60°C is 50 mPa·s or more, the initial cohesive force is sufficiently high, and therefore delamination from an adjacent layer can be suppressed. Furthermore, the thickness at the time of coating is uniform, and therefore appearance defects do not occur, and warpage does not occur. Note that, in the present description, "immediately after preparation" means within one minute after a composition containing a polyisocyanate component and a composition containing a polyol component are mixed and made uniform. The viscosity of the non-solvent adhesive composition is a value measured with a B-type viscometer.

<Drying adhesive composition>

Since the drying adhesive composition has a high attaching force, when the drying adhesive composition is used for manufacturing the adhesive layer (IV) forming the laminated body of the present embodiment, delamination from an adjacent layer is easily suppressed. In addition, many materials can be used as a material forming the drying adhesive composition. Therefore, preventing cohesive fracture is possible, and desired characteristics among various characteristics such as solvent resistance, boil resistance, and a retort property can easily be exhibited.

The drying adhesive composition contains a heat-fusible resin and a liquid component. As the liquid component, an organic solvent and/or water can be used, and it is preferable to contain at least water (drying aqueous adhesive composition) from the viewpoints of reducing environmental load, considering occupational safety, and suppressing delamination from the ink layer (III) due to high affinity with the ink layer (III).

Meanwhile, as the heat-fusible resin, for example, a vinyl acetate resin, an ethylene-vinyl acetate resin, a vinyl chloride resin, a (meth)acrylic resin, a polyamide resin, a cellulose resin, and an olefin resin can be preferably used. When the drying aqueous adhesive composition is used, the heat-fusible resin is preferably in a form of resin particles. In this case, it is preferable to use one or more resins selected from the group consisting of a vinyl acetate resin, an ethylene-vinyl acetate resin, a vinyl chloride resin, a (meth)acrylic resin, and an olefin resin from the viewpoint of being able to be stably present in the drying aqueous adhesive composition.

In addition, the drying adhesive composition may further contain a crosslinking agent from the viewpoints of further enhancing the suppression effect of delamination from an adjacent layer and preventing cohesive fracture of the adhesive layer (IV). As the crosslinking agent, for example, a polyisocyanate compound and a hydrazine compound can be used.

The drying adhesive composition may further contain additives such as an antioxidant, an ultraviolet absorber, an antifungal agent, a plasticizer, a surface additive, and a lubricant, as necessary.

<Deposited film (V)>

The deposited film (V) forming the laminated body of the present embodiment includes a resin film and a silica and/or alumina deposited layer. As described above, by using a transparent deposited film, in which silica and/or alumina are deposited on a resin film, the gas barrier effect of the laminated body is enhanced. **In** addition, in the laminated body formed such that the deposited layer and the adhesive layer (IV) are in contact with each other, the deposited layer and the adhesive layer (IV) are firmly bonded to each other. By this bonding, it is possible to prevent occurrence of delamination and deterioration of printed image quality after long-term storage, which cannot be achieved only by a surface modification method, such as corona treatment. As the resin film forming the deposited film (V), a polyolefin resin film such as polyethylene or polypropylene; a polyester resin film such as polyethylene terephthalate, polyethylene naphthalate, polycarbonate, or polylactic acid; a polyamide resin film such as nylon 6, nylon 12, or poly-p-xylylene adipamide; a polystyrene resin film; a polycarbonate resin film; an acrylonitrile-styrene copolymer (AS) resin film; a vinyl chloride resin film; an ABS resin film; an ethylene-vinyl alcohol copolymer (EVOH) resin film; and a film formed with a laminated body of these films or a mixture of the resins listed above can be used.

Further, for example, a film obtained by depositing silica and/or alumina on a resin film subjected to a coating treatment can also be used as the deposited film (V). In this case, a coating liquid containing fine particles of a metal oxide (for example, alumina, silica, or titania) and one or more resins selected from the group consisting of a (meth)acrylic resin, a styrene-(anhydrous) maleic acid copolymer resin, an olefin-(anhydrous) maleic acid copolymer resin, a urethane resin, a polyolefin resin, a polyester resin, a polyamide resin, and a polyol resin can be suitably used for the coating treatment. The coating liquid containing these components has high affinity with silica and/or alumina and the resin film, and therefore can further improve gas barrier property without causing cohesive fracture inside the deposited film (V).

Examples of a method for depositing silica and/or alumina on the resin film listed above include a vacuum vapor deposition method, a sputtering method, an oxidation reaction vapor deposition method, a plasma chemical vapor deposition method, and a thermochemical vapor deposition method, but are not particularly limited thereto. The deposited layer preferably has a thickness of 50 to 1000 Å. Furthermore, it is preferable to adjust the thickness of the deposited layer from the viewpoint that a laminated body having a favorable gas barrier property even after application of an action, such as stretching and shrinking, and after long-term storage, is easily obtained by suitably preventing cracking due to bending or the like with a siloxane-based surface additive and/or an acetylene diol-based surface additive bleeding to the deposited layer. In one embodiment, the thickness of the deposited layer is more preferably 100 to 600 Å, and particularly preferably 150 to 350 Å.

In addition, for the same reason, that is, from the point of easily obtaining a laminated body with excellent gas barrier property by preventing cracking due to bending or the like, it is preferable to specify the relationship between the content $(mg/m^2)$ of the siloxane-based surface additive and/or acetylene diol-based surface additive per unit area of the ink layer (III) and the thickness (Å) of the deposited layer. Specifically, a value obtained by dividing the content $(mg/m^2)$ "C" of the surface additive by the thickness (Å) "T1" of the deposited layer (C/T1) is preferably within a range of 1 to 100. The value (C/T1) is more preferably 2 to 50, and particularly preferably 3 to 25.

Furthermore, it is also suitable to control the ratio between the thickness of the resin film and the thickness of the deposited layer forming the deposited film (V) for the same reason, from the viewpoints of preventing cracking due to bending or the like and obtaining a laminated body excellent in gas barrier property. Specifically, a value obtained by dividing the thickness (nm) "T2" of the resin film by the thickness (Å) "T1" of the deposited layer (T2/T1) is preferably within a range of 10 to 500. The value (T2/T1) is more preferably 16 to 400, still more preferably 20 to 320, and particularly preferably 24 to 240.

The silica and/or alumina deposited layer may be in contact with the adhesive layer (IV), or does not have to be in contact with the adhesive layer (IV). The deposited layer is preferably in contact with the adhesive layer (IV) from the above-described viewpoint, that is, from the viewpoint that the deposited layer and the adhesive layer (IV) are firmly bonded to each other, and occurrence of delamination and deterioration of printed image quality after long-term storage can be prevented.

In the laminated body of the present embodiment, both the resin film used as the above-described non-permeable substrate (I) and the resin film forming the deposited film (V) are preferably polyolefin resin films (also referred to as polyolefin films). The polyolefin resin film has high flexibility, and even when the laminated body is strongly bent, the polyolefin resin film follows the bending direction. Therefore, the pretreatment layer (II), the ink layer (III), and the adhesive layer (IV) do not cause delamination. In particular, when an oriented polypropylene resin film is used as the polyolefin resin film, mechanical strength can also be imparted to the laminated body. Therefore, the internal layer can be easily protected against external force, and delamination and cohesive fracture can be further prevented. The oriented polypropylene resin film may be, for example, a uniaxially oriented polypropylene (OPP) film or a biaxially oriented polypropylene (BOPP) film.

<Method for manufacturing a laminated body>

Examples of a method for manufacturing the laminated body including the non-permeable substrate (I), the ink layer (III), the adhesive layer (IV), and the deposited film (V) described above in this order include a method including the following steps 1 to 4. When the laminated body includes the pretreatment layer (II), the method includes step 0 and step 1' instead of step 1.

<Step 0: Pretreatment layer (II) forming step>

When the laminated body includes the pretreatment layer (II), as step 0, a pretreatment liquid containing an aggregating agent, mentioned above, is applied onto the non-permeable substrate (I), and then dried and/or cured to obtain the pretreatment layer (II) (pretreatment layer (II) forming step). In this case, the pretreatment liquid is applied such that the content of the aggregating agent per unit area of the pretreatment layer (II) after drying and/or curing is from 0.02 to 1 $g/m^2$.

Note that, in the present application, "application of a pretreatment liquid" is used as a generic term for printing of the pretreatment liquid in a non-contact manner and application of the pretreatment liquid in contact with a substrate.

In addition, in the present description, "drying" refers to an action of removing a liquid component from a liquid film by means such as heating (details will be described later), and "curing" refers to an action of causing polymerization and/or crosslinking between components in a liquid film to proceed by means such as heating or irradiation with an active energy ray.

<Method for applying pretreatment liquid>

As a method for applying the pretreatment liquid onto the non-permeable substrate (I) in Step 0, either a method for performing printing on the non-permeable substrate (I) in a non-contact manner as in an inkjet printing method described later or a method for performing coating by bringing the pretreatment liquid into contact with the non-permeable substrate (I) may be adopted. When a method for performing coating by bringing the pretreatment liquid into contact is selected as the method for applying the pretreatment liquid, a form such as an offset gravure coater, a gravure coater, a doctor coater, a bar coater, a blade coater, a flexo coater, or a roll coater can be suitably used.

<Method for drying the applied pretreatment liquid>

When the pretreatment liquid applied to the non-permeable substrate (I) is dried, then the process may proceed to the next step (Step 1 or Step 1') after the pretreatment liquid on the non-permeable substrate (I) is completely dried. The process may also proceed to the next step before the pretreatment liquid on the non-permeable substrate (I) is completely dried. In one embodiment, the pretreatment liquid is preferably dried completely before the aqueous inkjet ink is printed. That is, it is preferable to bring about a state in which substantially no liquid component remains in the pretreatment layer (II) on the non-permeable substrate (I) at a start stage of the next step (Step 1 or Step 1'). By printing the aqueous inkjet ink after completely drying the pretreatment liquid, cohesive fracture in the pretreatment layer (II) can be suppressed. In addition, the aqueous inkjet ink does not cause drying failure, and a printed matter excellent in printed image quality, lamination suitability, and abrasion resistance is obtained.

A method for drying the pretreatment liquid is also not particularly limited, and examples thereof include conventionally known methods such as a heat-drying method, a hot air drying method, an infrared ray (for example, an infrared ray having a wavelength of 700 to 2500 nm) drying method, a microwave drying method, and a drum drying method. The drying method may be used singly, or a plurality of drying methods may be used continuously, or a plurality of drying methods may be used simultaneously. For example, by using both the heat-drying method and the hot air drying method, the ink can be dried more quickly than when each method is used alone. **In** particular, it is preferable to use the hot air drying method because it is possible to reduce damage to the non-permeable substrate (I) and to efficiently dry the ink. **In** addition, when the heat-drying method is adopted, the drying temperature is preferably 35 to 100°C from the viewpoints of preventing damage to the substrate and preventing bumping of a liquid component in the pretreatment liquid. When the hot air drying method is adopted, the hot air temperature is preferably 50 to 150°C.

The drying methods may be used singly, or a plurality of drying methods may be used continuously, or a plurality of drying methods may be used simultaneously. For example, by using both the heating drying method and the hot air drying method, the ink can be dried more quickly than when each method is used alone.

<Method for curing the applied pretreatment liquid>

Meanwhile, as a method for starting and/or accelerating a curing reaction when curing the pretreatment liquid applied to the non-permeable substrate (I), conventionally known methods such as heating and irradiation with an active energy ray can be used. Note that two or more of these methods may be combined. As the heating method, a same method to the method for drying the pretreatment liquid described above can be used. Meanwhile, an active energy ray generation source is not particularly limited. For example, ultraviolet lamps such as a high-pressure mercury lamp, an ultra-high-pressure mercury lamp, a metal halide lamp, an excimer laser lamp, and a xenon lamp; an ultraviolet light emitting diode (UV-LED); and an ultraviolet laser diode (UV-LD) can be used. These active energy ray generation sources may be used singly or in combination of a plurality of types of thereof.

<Step 1 and Step 1': Ink layer (III) forming step>

As Step 1 and Step 1', the aqueous inkjet ink containing the pigment, the resin, and the siloxane-based surface additive and/or the acetylene diol-based surface additive described above is printed on the non-permeable substrate (I), and then dried to obtain the ink layer (III) (ink layer (III) forming step). In this case, the aqueous inkjet ink is printed such that the content of the siloxane-based surface additive and/or the acetylene diol-based surface additive per unit area of the ink layer (III) after drying is from 1 to 500 mg/m$^2$. In addition, in the case where the laminated body includes the pretreatment layer (II), that is, in Step 1', the aqueous inkjet ink is printed such that at least part of the aqueous inkjet ink overlaps the pretreatment layer (II).

The ink layer (III) is preferably formed such that a surface thereof has an arithmetic mean roughness (also referred to as surface roughness "Ra") of 0.1 to 15.0 μm. The surface roughness of the ink layer (III) is more preferably 0.3 to 12.0 μm, and still more preferably 0.5 to 10.0 μm. By setting the surface roughness of the ink layer (III) to 15.0 μm or less, the contact surface with the adhesive layer (IV) is smooth to some extent, and a strain generated between both layers is small. Therefore, delamination can be suppressed. By setting the surface roughness of the ink layer (III) to 0.1 μm or more, a physical adhering force with the adhesive layer (IV) can be enhanced, and delamination is thereby easily suppressed.

Examples of a method for controlling the surface roughness (Ra) of the ink layer (III) to fall within the above range include the following.

A method for controlling wettability of the aqueous inkjet ink by adjusting the content of the siloxane-based surface additive and/or the acetylene diol-based surface additive per unit area of an ink layer (III) to fall within the above-described range.

A method for adopting a step of drying the aqueous inkjet ink using a hot air drying method (described later) and setting the hot air temperature to 50 to 90°C (preferably 50 to 80°C).

A method for applying pressure to the non-permeable substrate (I) after the aqueous inkjet ink is printed (preferably after the aqueous inkjet ink is dried) using a pressure roller with an adjusted nip width and pressure.

In the present description, as the surface roughness (Ra) of the ink layer (III), a value obtained by measuring an arithmetic mean roughness (Ra) of a surface within a range of 700 μm × 500 μm using a laser microscope (for example, "VK-X110" manufactured by KEYENCE CORPORATION) is used.

In addition, by controlling the content of the siloxane-based surface additive and/or the acetylene diol-based surface additive together with the surface roughness (Ra), cracking in the deposited layer in the deposited film (V) can be more suitably prevented, and a laminated body having a favorable gas barrier property even after applying an action such as bending, twisting, or stretching and shrinking can be obtained. It is considered that this is because when the surface of the ink layer (III) is rougher, the contact area between the ink layer (III) and the adhesive layer (IV) increases, and therefore bleeding of the siloxane-based surface additive and/or the acetylene diol-based surface additive easily proceeds.

From this viewpoint, a value of a product of a value "A" of the surface roughness Ra (μm) and a value "C" of the content (mg/m$^2$) of the siloxane-based surface additive and/or the acetylene diol-based surface additive (A*C) is preferably within a range of 15.0 to 7,500 ($\mu$m·mg/m$^2$). The value of the product is more preferably 200 to 5,500 ($\mu$m·mg/m$^2$), and particularly preferably 500 to 4,000 ($\mu$m·mg/m$^2$).

<Inkjet printing method>

By impact of droplets of the aqueous inkjet ink discharged from an inkjet head on the non-permeable substrate (I) or the pretreatment layer (II), printing is performed (inkjet printing method). Note that, as described above, in Step 0, the inkjet printing method may be adopted as a method for printing the pretreatment liquid on the non-permeable substrate (I). In Step 2 described later, the inkjet printing method may be adopted as a method for printing an adhesive composition. In these cases, the description of the "aqueous inkjet ink" is read as a "pretreatment liquid" and an "adhesive composition" in description of the inkjet printing method described later, respectively.

As the inkjet printing method, either a single pass method for discharging and recording an aqueous inkjet ink only once on the non-permeable substrate (I) or the pretreatment layer (II), or a serial method for performing discharge and recording while reciprocating a short shuttle head for scanning in a direction orthogonal to a conveyance direction of the non-permeable substrate (I) may be adopted. However, in the case of the serial method, it is necessary to adjust a discharge timing in consideration of movement of an inkjet head, and displacement of an impact position is likely to occur. Therefore, when the laminated body of the present invention is manufactured, the single pass method, in particular, a method for causing the non-permeable substrate (I) to pass through a lower portion of a fixed inkjet head is preferably used.

A method for discharging the aqueous inkjet ink is also not particularly limited. Conventionally known methods, for example, a drop on demand method (pressure pulse method) using a vibration pressure of a piezoelectric element, and a thermal inkjet (bubble jet (registered trademark)) method in which bubbles are formed by heating an aqueous inkjet ink and a generated pressure is used can be used.

A droplet amount of the aqueous inkjet ink discharged from an inkjet head is preferably 0.2 to 30 picoliters, and more preferably 1 to 20 picoliters in order to improve color reproducibility and printed image quality. Furthermore, a printing amount per unit area of the aqueous inkjet ink is preferably 1 to 50 mg/m$^2$, and more preferably 1 to 30 mg/m$^2$ from the viewpoint of an effect of reducing a drying load.

<Method for drying applied aqueous inkjet ink>

A method for drying the aqueous inkjet ink is same to that in the case of the pretreatment liquid described above. The above-described drying method may be used singly, a plurality of drying methods may be used continuously, or a plurality of drying methods may be used simultaneously. In drying of the aqueous inkjet ink, when a heating drying method is adopted, a drying temperature is preferably 35 to 100°C from the viewpoints of preventing bumping of a liquid component in the aqueous inkjet ink and obtaining a printed matter excellent in color reproducibility and printed image quality. When a hot air drying method is adopted, a hot air temperature is preferably 50 to 250°C. From the same viewpoint, when an infrared drying method is adopted, 50% or more of an integrated value of a total output of infrared rays used for irradiation with infrared rays is present in a wavelength region of 700 to 1500 nm.

<Step 2: Adhesive layer precursor forming step>

As Step 2, the above-described adhesive composition is applied onto the ink layer (III) and/or the deposited film (V) that is a resin film including a silica and/or alumina deposited layer to form an adhesive layer precursor (adhesive layer precursor forming step).

As a method for applying the adhesive composition in Step 2, a method for performing printing in a non-contact manner on the ink layer (III) and/or the resin film including a silica and/or alumina deposited layer can be adopted as in the above-described inkjet printing method. Alternatively, a method for performing coating by bringing the adhesive composition into contact with the ink layer (III) and/or the resin film including a silica and/or alumina deposited layer may be adopted. Note that details of the inkjet printing method and the method for performing coating by bringing the adhesive composition into contact are the same to those in the case of the aqueous inkjet ink and the case of the pretreatment liquid described above, respectively. The adhesive composition may be applied only to part of the ink layer (III) and/or the deposited film (V), or may be applied to the entire surface (solid) of the ink layer (III) and/or the deposited film (V). Furthermore, when the adhesive composition is applied to the deposited film (V), the adhesive composition may be applied to the deposited layer of the deposited film (that is, the ink layer (III) and the deposited layer face each other with the adhesive layer (IV) interposed therebetween). Alternatively, the adhesive composition may be applied to a surface (resin film) on which no deposited layer is present (that is, the ink layer (III) and the deposited layer do not face each other with the adhesive layer (IV) interposed therebetween). Note that, as described above, when the adhesive composition is applied to the deposited film (V), the adhesive composition is preferably applied to the deposited layer because occurrence of delamination and deterioration of printed image quality after long-term storage can be prevented.

In a preferred embodiment, it is preferable to adopt an inkjet printing method as a method for applying the adhesive composition from the points such as: an adhesive layer precursor can be formed in-line following Step 1 or Step 1'; and the application amount of the adhesive composition or the like can be changed accordingly to the printed image or the like. Meanwhile, a method for applying the adhesive composition by bringing the adhesive composition into contact is suitably used from the viewpoints of simplicity of an applying apparatus, uniform coatability in entire surface (solid) printing, economic efficiency, and the like.

The application amount of the adhesive composition is preferably $0.5$ g/m$^2$ or more and $10.0$ g/m$^2$ or less, and more preferably $1.0$ g/m$^2$ or more and $7.5$ g/m$^2$ or less.

<Step 3: Deposited film (V) overlaying step>

<Step 4: Adhesive Layer (IV) forming step>

After the adhesive composition is applied, the ink layer (III) and the deposited film (V) are overlaid onto each other with a laminator or the like (deposited film (V) overlaying step). Then, by allowing the overlaid layers to stand (aging) for about one day, the adhesive layer precursor is cured to develop a sufficient attaching force, and the laminated body of the present embodiment is obtained (adhesive layer (IV) forming step).

<Packaging container>

The laminated body of the present embodiment is used, for example, as a packaging container. The type and application of the packaging container are not particularly limited, but the packaging container can be suitably used for, for example, a food container, a detergent container, a cosmetic container, or a pharmaceutical container. The shape of the packaging container is not limited, and the packaging container can be molded into a shape corresponding to contents, and is suitably used for, for example, a pouch.

<Method for recycling laminated body and packaging container>

When the non-permeable substrate (I) forming the laminated body of the present embodiment is a thermoplastic resin film or a thermosetting resin film, and the laminated body includes the above-described pretreatment layer (II), the laminated body and a packaging container manufactured using the laminated body can be recycled.

Examples of a method for the recycling include: a method in which the non-permeable substrate (I) forming the laminated body is separated from the laminated body of the present embodiment and a packaging container manufactured using the laminated body, and the non-permeable substrate (I) after separation is reused; and alternatively a method in which a recycled plastic product is manufactured using the non-permeable substrate (I) after the separation.

As a method for separating the non-permeable substrate (I), for example, a method including an immersion step in a basic solution can be used. In the immersion step, the laminated body (or a packaging container manufactured using the laminated body) is immersed in a basic solution to separate the non-permeable substrate (I) from a plastic substrate. The basic solution contains at least a basic material and a liquid medium (preferably an aqueous medium). Note that, in order to improve separation efficiency, a laminated body (or a packaging container manufactured using the laminated body) that has been crushed, pulverized, or the like in advance may be used.

As the basic material, for example, a hydroxide of an alkali metal can be used, and sodium hydroxide or potassium hydroxide can be suitably used from the viewpoints of strength of basicity (magnitude of a pKb value), high solubility in an aqueous medium, availability, and the like. The amount (concentration) of the basic material is preferably $0.2$ to $15\%$ by mass, more preferably $0.5$ to $12\%$ by mass, and particularly preferably $1$ to $10\%$ by mass in the total amount of the basic solution. With the concentration within the above range, the basic solution can retain sufficient basicity for separation. In addition, even if there is no immersion of the basic solution into the plastic substrate, sufficient separability can be exhibited by, for example, permeation thereof from the surface or edges of a printed matter.

The temperature of the mixture during the immersion step in the basic solution is preferably $20$ to $120°C$, more preferably $25$ to $110°C$, still more preferably $28$ to $90°C$, and particularly preferably $30$ to $80°C$. Furthermore, the time for performing the immersion step within the suitable temperature range is preferably one minute to 24 hours, more preferably one minute to 12 hours, and particularly preferably one minute to 6 hours.

Note that it is preferable to perform separation while stirring during immersion. For example, in a case of stirring with a rotary blade, a rotation speed thereof is preferably $80$ to $250$ rpm, and more preferably $80$ to $200$ rpm.

The amount of the basic solution used is preferably 100 to one million times the mass of the laminated body (or a packaging container manufactured using the laminated body). Note that, in order to reduce the amount of the basic solution used, a separation apparatus capable of circulating the basic solution may be used.

It is preferable to use a polyolefin resin film as the non-permeable substrate (I) from the viewpoint of obtaining a laminated body (or a packaging container manufactured using the laminated body) suitable for recycling which is hardly affected by a basic solution during recycling. Among the polyolefin resin films, an oriented polypropylene resin film (for example, a uniaxially oriented polypropylene (OPP) film and a biaxially oriented polypropylene (BOPP) film) is particularly preferably used. When the deposited film (V) including an alumina deposited layer is used as the deposited film (V), alumina having solubility in the basic solution is dissolved in the above-described immersion step, and only the resin film forming the deposited film (V) can be extracted. Therefore, the deposited film (V) suitably includes an alumina deposited layer from the viewpoint of recyclability.

Furthermore, the non-permeable substrate (I) and the resin film forming the deposited film (V) are preferably the same type of resin from the viewpoint that the separated non-permeable substrate (I) and the resin film can be collectively used, for example, manufacturing a recycled plastic product, and the recycling efficiency is excellent. From this viewpoint, a polyolefin resin film is preferably used as the resin film forming the deposited film (V), and among the polyolefin resin films, an oriented polypropylene resin film (for example, a uniaxially oriented polypropylene (OPP) film and a biaxially oriented polypropylene (BOPP) film) is particularly preferably used.

Examples

Hereinafter, the laminated body and the method for manufacturing the laminated body according to the embodiment of the present invention, and a pretreatment liquid and its application method, an aqueous inkjet ink and its printing method, and an adhesive composition and its application method, used for manufacturing the laminated body, will be described more specifically with reference to Examples and Comparative Examples. Note that, in the following description, "parts" and "%" represent "parts by mass" and "% by mass", respectively, unless otherwise specified.

<Manufacture Example of pretreatment liquid>

<Manufacture of resin particles PE1>

Into a reaction vessel equipped with a gas introduction tube, a thermometer, a condenser, and a stirrer, 124 parts of ion-exchanged water and 1.2 parts of sodium polyoxyethylene lauryl ether sulfate (LATEMUL E-150 manufactured by Kao Corporation) as an emulsifier were added. Meanwhile, another mixing vessel equipped with a stirrer was prepared, and 0.5 parts of acrylic acid, 30.0 parts of methyl methacrylate, 15.0 parts of n-butyl acrylate, 54.5 parts of n-butyl methacrylate, 64 parts of ion-exchanged water, and 0.8 parts of sodium polyoxyethylene lauryl ether sulfate (LATEMUL E-150 manufactured by Kao Corporation) as an emulsifier were sequentially added thereto, and then stirred and mixed to obtain an emulsified liquid.

An amount of 8 parts of the emulsified liquid was extracted and added to the reaction vessel. After the addition, the internal temperature was raised to 80°C, and the inside of the vessel was sufficiently replaced with nitrogen. Thereafter, 4 parts of a 5% aqueous solution of potassium persulfate and 8 parts of a 1% aqueous solution of anhydrous sodium bisulfite were added thereto to start a polymerization reaction. After starting of the polymerization reaction, while the internal temperature was maintained at 80°C, the remainder of the above-prepared emulsion, 1.2 parts of a 5% aqueous solution of potassium persulfate, and 2.5 parts of a 1% aqueous solution of anhydrous sodium bisulfite were added dropwise thereto over 1.5 hours. After completion of the dropwise addition, stirring was further continued for two hours, and then the mixture was cooled until the internal temperature reached 30°C or lower. Then, dimethylaminoethanol was added thereto to adjust the pH of the contents to 8.5, and then ion-exchanged water was added thereto to adjust the solid content to 30%, thereby obtaining an aqueous dispersion (solid content: 30%) of (meth)acrylic resin particles 1 (PE1) having an acid value of 4 mgKOH/g.

<Manufacture of resin particles PE2 to PE10>

(Meth)acrylic resin particles 2 to 10 (PE2 to PE10) were manufactured using the same method to that of the resin particles PE1 except that materials described in Table 1 were used.

[Table 1]

|  | PE1 | PE2 | PE3 | PE4 | PE5 | PE6 | PE7 | PE8 | PE9 | PE10 |
|---|---|---|---|---|---|---|---|---|---|---|
| Methyl methacrylate | 30% | 30% | 30% | 30% | 30% | 30% | 30% |  | 30% | 45% |
| n-Butyl methacrylate | 54.5% | 53% | 50% | 47.5% | 45% | 50% | 50% | 50% | 20% | 20% |
| n-Butyl acrylate | 15% | 15% | 15% | 15% | 15% |  |  | 15% | 15% |  |
| 2-Ethylhexyl acrylate |  |  |  |  |  | 15% |  |  |  |  |

(continued)

| | PE1 | PE2 | PE3 | PE4 | PE5 | PE6 | PE7 | PE8 | PE9 | PE10 |
|---|---|---|---|---|---|---|---|---|---|---|
| Lauryl methacrylate | | | | | | | 15% | | | |
| Styrene | | | | | | | | 30% | 30% | 30% |
| Acrylic acid | 0.5% | 2% | 5% | 7.5% | 10% | 5% | 5% | 5% | 5% | 5% |
| Acid value | 4 | 16 | 39 | 58 | 78 | 39 | 39 | 39 | 39 | 39 |

Note that Table 1 also describes acid values of PE1 to PE10.

<Manufacture of pretreatment liquid 1>

The following materials were added into a mixing vessel equipped with a stirrer, and mixed at room temperature (25°C) for one hour. Thereafter, the mixture was heated to 50°C, and further mixed for one hour. Thereafter, the mixture was cooled to room temperature, and then filtered with a nylon mesh having a pore size of 100 $\mu$m to obtain a pretreatment liquid 1. Note that details of the following materials will be described later.

| | |
|---|---|
| . NeoCryl XK-190 | 11.1 parts |
| · Calcium formate | 2.5 parts |
| · Calcium lactate | 2.5 parts |
| · 2-Propanol | 5.0 parts |
| · Surfynol 440 | 1.0 parts |
| . Proxel GXL | 0.05 parts |
| · Ion-exchanged water | 77.84 parts |

<Manufacture of pretreatment liquids 2 to 16>

Pretreatment liquids 2 to 19 were manufactured using the same method to that of the pretreatment liquid 1 except that materials described in Table 2 were used.

[Table 2-1]

| | | Pretreatment liquid 1 | Pretreatment liquid 2 | Pretreatment liquid 3 | Pretreatment liquid 4 | Pretreatment liquid 5 | Pretreatment liquid 6 | Pretreatment liquid 7 | Pretreatment liquid 8 | Pretreatment liquid 9 |
|---|---|---|---|---|---|---|---|---|---|---|
| Aggregating agent | Calcium lactate | 2.5% | 10% | 0.3% | 2.5% | 2.5% | 2.5% | | | |
| | Calcium formate | 2.5% | 10% | 0.3% | 2.5% | 2.5% | 2.5% | | | |
| | Calcium acetate | | | | | | | | | |
| | Catiomaster PDT-2 | | | | | | | 8.3% | | |
| | PAA-HCL-3L | | | | | | | | 10% | |
| | Acetic acid | | | | | | | | | 5% |
| Resin | Type | XK-190 | XK-190 | XK-190 | XK-190 | XK-190 | XK-190 | XK-190 | XK-190 | XK-190 |
| | Blending amount | 11.1% | 11.1% | 11.1% | 6.7% | 4.4% | 66.7% | 11.1% | 11.1% | 11.1% |
| Solvent | IPA | 5% | 5% | 5% | 5% | 5% | 5% | 5% | 5% | 5% |
| Surface additive | Surfynol 440 | 1% | 1% | 1% | 1% | 1% | 1% | 1% | 1% | 1% |
| Preservative | Proxel GXL | 0.05% | 0.05% | 0.05% | 0.05% | 0.05% | 0.05% | 0.05% | 0.05% | 0.05% |
| Ion-exchanged water | | 77.84% | 62.84% | 82.34% | 82.28% | 84.51% | 22.28% | 74.51% | 72.84% | 77.84% |

[Table 2-2]

| | | [Table 2] (continued) | | | | | | | | | |
|---|---|---|---|---|---|---|---|---|---|---|---|
| | | Pretreatment liquid 10 | Pretreatment liquid 11 | Pretreatment liquid 12 | Pretreatment liquid 13 | Pretreatment liquid 14 | Pretreatment liquid 15 | Pretreatment liquid 16 | Pretreatment liquid 17 | Pretreatment liquid 18 | Pretreatment liquid 19 |
| Aggregating agent | Calcium lactate | 2% | 2% | 2% | 2% | 2% | 2% | 2% | 2% | 2% | 2% |
| | Calcium formate | | | | | | | | | | |
| | Calcium acetate | 4% | 4% | 4% | 4% | 4% | 4% | 4% | 4% | 4% | 4% |
| | Catiomaster PDT-2 | | | | | | | | | | |
| | PAA-HCL-3L | | | | | | | | | | |
| | Acetic acid | | | | | | | | | | |
| Resin | Type | PE1 | PE2 | PE3 | PE4 | PE5 | PE6 | PE7 | PE8 | PE9 | PE10 |
| | Blending amount | 16.7% | 16.7% | 16.7% | 16.7% | 16.7% | 16.7% | 16.7% | 16.7% | 16.7% | 16.7% |
| Solvent | IPA | 5% | 5% | 5% | 5% | 5% | 5% | 5% | 5% | 5% | 5% |
| Surface additive | Surfynol 440 | 1% | 1% | 1% | 1% | 1% | 1% | 1% | 1% | 1% | 1% |
| Preservative | Proxel GXL | 0.05% | 0.05% | 0.05% | 0.05% | 0.05% | 0.05% | 0.05% | 0.05% | 0.05% | 0.05% |
| Ion-exchanged water | | 71.25% | 71.25% | 71.25% | 71.25% | 71.25% | 71.25% | 71.25% | 71.25% | 71.25% | 71.25% |

Note that details of the trade names and abbreviations described in Table 2 are as follows.

· Catiomaster PDT-2: dimethylamine-epichlorohydrin condensate quaternary ammonium salt manufactured by Yokkaichi Chemical Company Limited, solid content: 60%
· PAA-HCL-3L: polyallylamine hydrochloride manufactured by Nittobo Medical Co., Ltd., solid content: 50%
· Acetic acid: manufactured by FUJIFILM Wako Pure Chemical Corporation, purity: 99.7% (glacial acetic acid)
· XK-190: NeoCryl XK-190: ((meth)acrylic resin particles manufactured by DSM Coating Resins, solid content: 45%)
· IPA: isopropyl alcohol (low surface tension solvent, boiling point at 1 atm = 83°C)
· Surfynol 440: acetylene diol-based surface additive manufactured by Nissin Chemical Industry Co., Ltd.
· Proxel GXL: dipropylene glycol solution of 1,2-benzisothiazol-3-one (preservative manufactured by Arch Chemicals Inc., solid content: 20%)

<Manufacture Example of aqueous inkjet ink>

<Manufacture of pigment dispersing resin 1>

Into a reaction vessel equipped with a gas introduction tube, a thermometer, a condenser, and a stirrer, 95 parts of butanol was added, and replacement with a nitrogen gas was performed. The inside of the reaction vessel was heated to 110°C, and then a mixture of 45 parts of styrene, 30 parts of acrylic acid, and 25 parts of lauryl methacrylate as polymerizable monomers and 6 parts of V-601 (manufactured by FUJIFILM Wako Pure Chemical Corporation) as a polymerization initiator was added dropwise thereto over two hours. After completion of the dropwise addition, the polymerization reaction was continued for three hours while the temperature in the reaction vessel was maintained at 110°C, then 0.6 parts of V-601 was further added thereto, and the polymerization reaction was continued at 110°C for one hour. Thereafter, the inside of the reaction vessel was cooled to room temperature (25°C). Thereafter, dimethylaminoethanol was added thereto to completely neutralize acid groups of a reaction product, and then 100 parts of water was added thereto. Thereafter, the mixture containing the reaction product was heated to 100°C or higher, butanol was distilled off by azeotropic distillation with water, and water was further added thereto to adjust the solid content to 30%, thereby obtaining a water-based solution of the pigment dispersing resin 1 (a solution containing an aqueous solvent and a component dispersed and/or dissolved in the aqueous solvent). Note that an acid value of the pigment dispersing resin 1 calculated using the above formula 1 was 234 mgKOH/g.

<Manufacture of black pigment dispersion>

Into a mixing vessel equipped with a stirrer, 15 parts of carbon black ("PrinteX85" manufactured by Orion Engineered Carbons), 10 parts of a water-based solution of the pigment dispersing resin 1 (solid content: 30%), and 75 parts of water were added, and pre-mixing was performed for one hour. Thereafter, circulation dispersion was performed using DYNO-MILL (manufactured by Shinmaru Enterprises Corporation, volume: 0.6 L) filled with 1800 g of zirconia beads having a diameter of 0.5 mm to manufacture a black pigment dispersion.

<Manufacture of cyan pigment dispersion, magenta pigment dispersion, and yellow pigment dispersion>

A cyan pigment dispersion, a magenta pigment dispersion, and a yellow pigment dispersion were obtained by using the same method to that of the black pigment dispersion 1 except that the following pigments were used.

· Cyan: LIONOL BLUE 7358G (C.I. Pigment Blue 15:3) manufactured by Toyocolor Co., Ltd.
· Magenta: obtained by mixing equal amounts of FASTGEN SUPER MAGENTA RG (C.I. Pigment Red 122) manufactured by DIC Corporation and TOSHIKI RED 150TR (C.I. Pigment Red 150) manufactured by Tokyo Shikizai Industry Co., Ltd.
· Yellow: Paliotol Yellow D 1155 (C.I. Pigment Yellow 185) manufactured by BASF SE

<Manufacture Example of white pigment dispersion>

Into a mixing vessel equipped with a stirrer, 45 parts of titanium oxide ("TIPAQUE CR-60" manufactured by ISHIHARA SANGYO KAISHA, LTD.), 18 parts of a water-based solution of the pigment dispersing resin 1 (solid content: 30%), and 37 parts of water were added, and pre-mixing was performed for one hour. Thereafter, circulation dispersion was performed using DYNO-MILL (manufactured by Shinmaru Enterprises Corporation, volume: 0.6 L) filled with 1800 g of zirconia beads having a diameter of 0.5 mm to manufacture a white pigment dispersion.

<Synthesis of binder resin 1>

Into a reaction vessel equipped with a gas introduction tube, a thermometer, a condenser, and a stirrer, 93.4 parts of butanol was put, and replacement with a nitrogen gas was performed. The inside of the reaction vessel was heated to 110°C, and then a mixture of 25 parts of styrene, 5 parts of methacrylic acid, and 70 parts of methyl methacrylate as polymerizable monomers and 6 parts of V-601 (manufactured by FUJIFILM Wako Pure Chemical Corporation) as a polymerization initiator was added dropwise thereto over two hours. After completion of the dropwise addition, the polymerization reaction was continued for three hours while the temperature in the reaction vessel was maintained at 110°C, then 0.6 parts of V-601 was further added thereto, and the polymerization reaction was continued at 110°C for one hour. Thereafter, the inside of the reaction vessel was cooled to room temperature. Thereafter, 37.1 parts of dimethylaminoethanol was added thereto, and then 100 parts of water was added thereto. Thereafter, the mixture containing a reaction product was heated to 100°C or higher, butanol was distilled off by azeotropic distillation with water, and water was further added thereto to adjust the solid content to 30%, thereby obtaining a water-based solution of the binder resin 1. The weight average molecular weight of the binder resin 1, measured using the method described above was 18,000. The binder resin 1 had an acid value of 32 mgKOH/g.

<Manufacture of inkjet ink set 1>

While contents in a mixing vessel were stirred with a stirrer, the following materials were sequentially put into the mixing vessel and stirred until the mixture became sufficiently uniform. Thereafter, filtration was performed with a membrane filter having a pore size of 1 μm to obtain an inkjet ink K1.

(Materials)

| | |
|---|---|
| Black pigment dispersion | 33.3 parts |
| Binder resin 1 (solid content: 30%) | 13.3 parts |
| 1,2-Propanediol | 20.0 parts |
| Surfynol 440 | 1.0 parts |
| TEGO WET 280 | 1.0 parts |
| Proxel GXL | 0.05 parts |
| Ion-exchanged water | 31.28 parts |

In addition, the black pigment dispersion was replaced with a cyan pigment dispersion, a magenta pigment dispersion, a yellow pigment dispersion, and a white pigment dispersion, and an inkjet ink C1, an inkjet ink M1, an inkjet ink Y1, and an inkjet ink W1 were respectively obtained by using the same materials and methods to those of the inkjet ink K1 except for these pigment dispersions. Then, the inkjet inks of five colors of black, cyan, magenta, yellow, and white obtained so far were used as an inkjet ink set 1.

<Manufacture of inkjet ink sets 2 to 10>

Inkjet ink sets 2 to 10 (each of which contained five colors of black, cyan, magenta, yellow, and white) were obtained by using the same method to that of the inkjet ink set 1 except that the materials described in Table 3 were used.

[Table 3]

| | | | Ink set No. | 1 | 2 | 3 | 4 | 5 | 6 | 7 | 8 | 9 | 10 |
|---|---|---|---|---|---|---|---|---|---|---|---|---|---|
| | | | Black ink | K1 | K2 | K3 | K4 | K5 | K6 | K7 | K8 | K9 | K10 |
| | | | Cyan ink | C1 | C2 | C3 | C4 | C5 | C6 | C7 | C8 | C9 | C10 |
| | | | Magenta ink | M1 | M2 | M3 | M4 | M5 | M6 | M7 | M8 | M9 | M10 |
| | | | Yellow ink | Y1 | Y2 | Y3 | Y4 | Y5 | Y6 | Y7 | Y8 | Y9 | Y10 |
| | | | White ink | W1 | W2 | W3 | W4 | W5 | W6 | W7 | W8 | W9 | W10 |
| Blending amount | Pigment dispersion | Pigment dispersion (any of black, cyan, magenta, yellow, and white) | | 33.3% | 33.3% | 33.3% | 33.3% | 33.3% | 33.3% | 33.3% | 33.3% | 33.3% | 33.3% |
| | Resin | Binder resin 1 | | 13.3% | 13.3% | 13.3% | 13.3% | 13.3% | 13.3% | 13.3% | 13.3% | 13.3% | 13.3% |
| | Surface additive | Acetylene diol | Surfynol 440 | 1% | 2% | | 2% | | | | | | |
| | | | Surfynol 104 | | | | | 2% | | | | | |
| | | | Surfynol 485 | | | | | | 2% | | | | |
| | | Siloxane | TEGO Wet 280 | 1% | | 2% | 2% | | | | | | |
| | | | BYK-349 | | | | | | | 2% | | | |
| | | | KF-6011 | | | | | | | | 2% | | |
| | | Others | Surflon S243 | | | | | | | | | | 2% |
| | Solvent | 1,2-Propanediol | | 20% | 20% | 20% | 20% | 20% | 20% | 20% | 20% | 20% | 20% |
| | Others | Proxel GXL | | 0.05% | 0.05% | 0.05% | 0.05% | 0.05% | 0.05% | 0.05% | 0.05% | 0.05% | 0.05% |
| | | Ion-exchanged water | | 31.28% | 31.28% | 31.28% | 29.28% | 31.28% | 31.28% | 31.28% | 31.28% | 33.28% | 31.28% |

Among the trade names described in Table 3, details of those not used in Table 2 are as follows.

· Surfynol 104: acetylene diol-based surface additive manufactured by Nissin Chemical Industry Co., Ltd.
· Surfynol 485: acetylene diol-based surface additive manufactured by Nissin Chemical Industry Co., Ltd.
· TEGO Wet 280: siloxane-based surface additive manufactured by Evonik Japan Co., Ltd.
· BYK-349: siloxane-based surface additive manufactured by BYK Japan KK
· KF-6011: siloxane-based surface additive manufactured by Shin-Etsu Chemical Co., Ltd.
· Surflon S243: fluorine-based surface additive manufactured by AGC Seimi Chemical Co., Ltd.

<Manufacture Example of non-solvent adhesive composition>

<Synthesis of isocyanate K1>

The following materials were put into a reaction vessel equipped with a stirrer. Subsequently, the contents were heated to 70°C to 80°C while flowing nitrogen gas into the reaction vessel and the contents were stirred. Then, a urethanization reaction was continued for three hours while the temperature in the reaction vessel was maintained at 70 to 80°C to obtain a mixed solution containing a reaction product (polyisocyanate K-1) of an aromatic isocyanate compound and a polyol.

(Materials)

| | |
|---|---|
| Polypropylene glycol (number average molecular weight: about 400) | 300 parts |
| Polypropylene glycol (number average molecular weight: about 2,000) | 300 parts |
| 4,4'-Diphenylmethane diisocyanate | 400 parts |
| 2,4'-Diphenylmethane diisocyanate | 600 parts |

<Synthesis of polyisocyanates K-2 to K-9>

A mixed solution containing a reaction product (polyisocyanates K-2, K-3, and K-5 to K-9) of an aromatic isocyanate compound and a polyol, and a mixed solution containing a reaction product of a nonaromatic isocyanate compound and a polyol, which is a nonaromatic isocyanate compound (polyisocyanate K-4) having an isocyanate group at a terminal thereof, were obtained by using the same method to that for the polyisocyanate K-1 except that the raw materials presented in Table 4 were used.

[Table 4]

| | | Polyisocyanate component | | | | | | | | |
|---|---|---|---|---|---|---|---|---|---|---|
| | | K-1 | K-2 | K-3 | K-4 | K-5 | K-6 | K-7 | K-8 | K-9 |
| Polyether polyol | PPG-400 | 300 | 300 | 75 | 300 | | | | | 300 |
| | PPG-2000 | 300 | 300 | 75 | 400 | | | | | |
| Polyester polyol | TL2464 | | | | | 900 | | | 300 | 160 |
| | HS2F-136P | | | | | | 900 | | | |
| | PePOH1 | | | | | | | 600 | 300 | |
| Polyisocyanate compound | 4,4-MDI | 400 | 350 | 400 | | 400 | 400 | 400 | 400 | 300 |
| | 2,4-MDI | 600 | | 600 | | 600 | 600 | 600 | 600 | |
| | HDI | | 350 | | 600 | | | | | 300 |

Note that details of the abbreviations and trade names described in Table 4 are as follows.

· PPG-400: polypropylene glycol (number average molecular weight: about 400)
· PPG-2000: polypropylene glycol (number average molecular weight: about 2,000)

· TL2464: Tesluck 2464 (polyester polyol manufactured by Showa Denko Material Co., Ltd., number average molecular weight: about 1,000)

· HS2F-136P: polyester polyol manufactured by Hokoku Corporation (number average molecular weight: about 1,000)

· PePOH1: polyester polyol having an acid group (carboxy group), manufactured using the materials and method described in Manufacture Example 1 of JP 2013-43936 A (number average molecular weight: about 520, acid value: 96 mgKOH/g)

· 4,4'-MDI: 4,4'-diphenylmethane diisocyanate

· 2,4'-MDI: 2,4'-diphenylmethane diisocyanate

· HDI: hexamethylene diisocyanate

<Manufacture of polyol M-1>

A polyol (referred to as polyol M-1) was manufactured using the same method to that in Synthesis Example 201 described in JP 2017-177800 A.

<Manufacture of non-solvent adhesive compositions 1 to 9>

At 60°C, 100 parts of the mixed solution containing the polyisocyanate K-1 obtained above and 50 parts of the polyol M-1 obtained above were mixed to obtain a non-solvent adhesive composition 1. In addition, non-solvent adhesive compositions 2 to 9 were obtained by using the same method to that for the non-solvent adhesive composition 1 except that the materials presented in Table 5 were used. Note that non-solvent adhesive compositions 8 and 9 manufactured using polyisocyanates K-7 and K-8, which are polyester polyols having acid values, have acid values of 11 mgKOH/g and 5.5 mgKOH/g, respectively.

[Table 5]

| | | Adhesive 1 | Adhesive 2 | Adhesive 3 | Adhesive 4 | Adhesive 5 | Adhesive 6 | Adhesive 7 | Adhesive 8 | Adhesive 9 |
|---|---|---|---|---|---|---|---|---|---|---|
| Mixed solution containing polyisocyanate component | Type | K-1 | K-2 | K-3 | K-4 | K-5 | K-6 | K-7 | K-8 | K-9 |
| | Addition amount | 100 | 100 | 100 | 100 | 100 | 100 | 100 | 100 | 100 |
| Polyol component (M-1) | Addition amount | 50 | 50 | 50 | 50 | 50 | 50 | 50 | 50 | 50 |
| Ratio (% by mass) of aromatic isocyanate compound in solventless adhesive composition | | 34.4 | 15.6 | 48.4 | 0 | 27.1 | 27.1 | 35.2 | 34.5 | 16.6 |

<Manufacture of drying adhesive composition 10>

800 parts of Arrowbase SB-1230N (resin particle solution of polyolefin resin manufactured by Unitika Ltd, solid content: 27%), 62 parts of isopropyl alcohol (IPA), and 218 parts of water were mixed to obtain a drying adhesive composition 10 (solid content: 20%).

<Manufacture Example of laminated body>

<Application of pretreatment liquid>

Using a non-wire bar coater 250-OSP-02 or 50-OSP-04 manufactured by OSG Systems Products Co., Ltd., each of the pretreatment liquids 1 to 19 prepared above was applied to the non-absorbent substrate (I) described in Table 6 so as to have a wet film thickness of 2 $\mu$m or 4 $\mu$m. Subsequently, the applied film was put into an air oven at 70°C and dried for two minutes to prepare a film having the pretreatment layer (II).

<Printing of aqueous inkjet ink>

Five inkjet heads KJ4B-1200 (manufactured by KYOCERA Corporation, resolution: 1200 dpi, maximum driving frequency: 64 kHz) were installed on an upper part of a conveyor capable of conveying a printing substrate, and each of the inkjet ink sets 1 to 10 prepared above was filled with K (black), C (cyan), M (magenta), Y (yellow), and W (white) in this order from an upstream side. Subsequently, the non-permeable substrate (I) or the film having the pretreatment layer (II) prepared above was placed on the conveyor, and then the conveyor was driven at 50 m/min. Then, when the non-permeable substrate (I) or the film passed through the portion where the inkjet heads were installed, an aqueous inkjet ink was discharged to print the following three types of images. Note that a drop volume of the aqueous inkjet ink from each of the inkjet heads was adjusted to fall within a range of 1.5 pL to 5 pL per drop so as to obtain a desired layer thickness. Thereafter, the printed film was immediately put in an air oven at 70°C and dried for three minutes to prepare a film having the ink layer (III) (and the pretreatment layer (II)).

As the images, the following three types of images were prepared, printing was performed for each combination described in Table 6, and a laminated body was manufactured using a method described later and the materials described in Table 6.

Grayscale printed matter: an image printed by adjusting the coverage rate such that the amount of the aqueous inkjet ink on the film immediately after printing is a value described in Table 6, and arranging the aqueous inkjet inks such that the inks do not overlap each other

Solid printed matter: an image printed with a coverage rate of 100% by arranging the aqueous inkjet inks such that the inks do not overlap each other

Character printed matter: an image printed by arranging characters composed of 4-point, 6-point, and 8-point MS Mincho characters in which hiragana characters and kanji characters are mixed , for each color, such that the characters do not overlap each other[0222]

<Application of adhesive composition and Manufacture of laminated body>

Using a test coater, each of the non-solvent adhesive compositions 1 to 9 or the drying adhesive composition 10 prepared above was applied to a surface of the ink layer (III) of the film having the ink layer (III) (and the pretreatment layer (II)) prepared above at a temperature of 60°C and a coating speed of 50 m/min so as to have the application amount described in Table 6, thereby forming an adhesive layer precursor. A film described below was overlaid on the adhesive layer precursor, and then the resulting product was aged in an environment of 25°C and 80%RH for one day to cure the adhesive composition, thereby obtaining a laminated body.

Note that details of the film used in Table 6 will be described below.

· OPP: biaxially oriented polypropylene film "OPU-1" (thickness: 20 $\mu$m) manufactured by Mitsui Chemicals Tohcello Inc.

· PE: polyethylene film "PE3M" (thickness: 25 $\mu$m) manufactured by Futamura Chemical Co. Ltd.

· PET: polyethylene terephthalate film "FE2001" (thickness: 12 $\mu$m) manufactured by Futamura Chemical Co. Ltd.

· VMCPP: aluminum deposited polypropylene film "2203" (thickness: 25 $\mu$m) manufactured by Toray Industries, Inc.

· Alumina deposited PP: alumina deposited polypropylene film "GL-LP" manufactured by TOPPAN Inc.

· Alumina deposited PET: alumina deposited polyester film "Barrialox 1011HG" manufactured by Toray Industries, Inc.

· Silica deposited PP: silica deposited polypropylene film "GL-BP" manufactured by TOPPAN Inc.

· Silica deposited PET: silica deposited polyester film "TECHBARRIER TX" manufactured by Mitsubishi Chemical Corporation

· Dual element deposited PET: silica/alumina deposited polyester film "ECOSYAR VE100" manufactured by Toyobo Co., Ltd.

Note that, in Comparative Examples 1 to 3 described later, the VMCPP, the OPP, and the PP are used as the "deposited film (V)". None of these films is a deposited film including a silica and/or alumina deposited layer.

[Table 6-1]

| [Table 6] | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Non-permeable substrate (I) | | OPP | PE | PE | VMCPP | OPP | OPP | OPP | OPP | OPP | PET |
| Pretreatment layer (II) | Pretreatment liquid used | Pretreatment liquid 1 | | | | | | | | | |
| | Pretreatment liquid application amount (before drying) (g/m$^2$) | 2 | | | | | | | | | |
| | Amount of aggregating agent (g/m$^2$) | 0.1 | | | | | | | | | |
| | Amount of other resin (IIR) (g/m$^2$) | 0.1 | | | | | | | | | |
| Ink layer (III) | Ink set used | Ink set 1 | | | | | | | | | |
| | Ink application amount of solid portion (before drying) (g/m$^2$) | 12 | | | | | | | | | |
| | Amount of siloxane/acetylene diol surface additive (mg/m$^2$) | 240 | | | | | | | | | |
| Adhesive layer (IV) | Adhesive composition used | Adhesive 1 | | | | | | | | | |
| | Adhesive application amount (g/m$^2$) | 2 | | | | | | | | | |
| | Content of aromatic isocyanate (g/m$^2$) | 0.69 | | | | | | | | | |
| Deposited film (V) | Type and film thickness | Alumina deposited PP | Alumina deposited PP | Alumina deposited PE | Alumina deposited PP | Alumina deposited PET | SiO depositio n PP | Silica deposited PET | Dual element deposited PP | Dual element deposited PET | Alumina deposited PP |
| | Adhesive layer contacting surface | Treatment surface | Treatment surface | Treatment surface | Treatment surface | Treatment surface | Treatment surface | Treatment surface | Treatment surface | Treatment surface | Treatment surface |

(continued)

[Table 6]

|  | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Evaluation results | Evaluation 1: Delamination/cohesi ve fracture | 5 | 5 | 5 | 5 | 5 | 5 | 5 | 5 | 5 | 5 |
|  | Evaluation 2: Delamination/cohesi ve fracture after bending | 5 | 5 | 5 | 5 | 3 | 5 | 3 | 5 | 3 | 3 |
|  | Evaluation 3: Gas barrier property | 5 | 5 | 5 | 5 | 5 | 5 | 5 | 5 | 5 | 5 |
|  | Evaluation 4: Gas barrier property after bending | 5 | 5 | 5 | 5 | 3 | 5 | 3 | 5 | 3 | 5 |
|  | Evaluation 5: Color unevenness and mixed color bleeding | 4 | 4 | 4 | 4 | 4 | 4 | 4 | 4 | 4 | 4 |
|  | Evaluation 6: Clearness/visibility | 5 | 5 | 5 | 5 | 5 | 5 | 5 | 5 | 5 | 5 |

[Table 6-2]

| [Table 6] (continued) | | Example 11 | Example 12 | Comparative Example 1 | Comparative Example 2 | Example 13 | Example 14 | Example 15 | Comparative Example 3 | Example 16 | Example 17 |
|---|---|---|---|---|---|---|---|---|---|---|---|
| Non-permeable substrate (I) | | PET | OPP | OPP | OPP | OPP | PE | OPP | OPP | OPP | |
| Pretreatment layer (II) | Pretreatment liquid used | Pretreatment liquid 1 | | | | None | None | None | None | Pretreatment liquid 1 | Pretreatment liquid 2 |
| | Pretreatment liquid application amount (before drying) (g/m$^2$) | 2 | | | | | | | | 4 | 2 |
| | Amount of aggregating agent (g/m$^2$) | 0.1 | | | | | | | | 0.2 | 0.4 |
| | Amount of other resin (IIR) (g/m$^2$) | 0.1 | | | | | | | | 0.2 | 0.1 |
| Ink layer (III) | Ink set used | Ink set 1 | | | | | | | | | |
| | Ink application amount of solid portion (before drying) (g/m$^2$) | 12 | | | | | | | | | |
| | Amount of siloxane/acetylene diol surface additive (mg/m$^2$) | 240 | | | | | | | | | |
| Adhesive layer (IV) | Adhesive composition used Adhesive application amount (g/m$^2$) | Adhesive 1 | | | | | | | | | |
| | | 2 | | | | | | | | | |
| | Content of aromatic isocyanate (g/m$^2$) | 0.69 | | | | | | | | | |
| Deposited film (V) | Type and film thickness | Alumina deposited PET | Alumina deposited PP | VMCPP | OPP | Alumina deposited PP | Alumina deposited PP | Alumina deposited PET | PP | Alumina deposited PP | |
| | Adhesive layer contacting surface | Treatment surface | Non-treated surface | Treatment surface | Treatment surface | Treatment surface | Treatment surface | Treatment surface | Treatment surface | Treatment surface | |

[Table 6] (continued)

(continued)

| | Example 11 | Example 12 | Comparative Example 1 | Comparative Example 2 | Example 13 | Example 14 | Example 15 | Comparative Example 3 | Example 16 | Example 17 |
|---|---|---|---|---|---|---|---|---|---|---|
| Evaluation results | | | | | | | | | | |
| Evaluation 1: Delamination/cohesive fracture | 5 | 3 | 2 | 1 | 4 | 4 | 4 | 1 | 5 | 5 |
| Evaluation 2: Delamination/cohesive fracture after bending | 3 | 3 | 1 | 1 | 4 | 4 | 3 | 1 | 5 | 5 |
| Evaluation 3: Gas barrier property | 5 | 4 | 3 | 1 | 5 | 5 | 5 | 1 | 5 | 5 |
| Evaluation 4: Gas barrier property after bending | 5 | 3 | 2 | 1 | 5 | 5 | 3 | 1 | 5 | 5 |
| Evaluation 5: Color unevenness and mixed color bleeding | 4 | 4 | 4 | 1 | 2 | 2 | 2 | 1 | 4 | 4 |
| Evaluation 6: Clearness/visibility | 5 | 5 | 5 | 2 | 3 | 3 | 3 | 1 | 5 | 5 |

[Table 6-3]

| [Table 6] (continued) | | Example 18 | Example 19 | Example 20 | Example 21 | Example 22 | Example 23 | Example 24 | Example 25 | Example 26 | Example 27 |
|---|---|---|---|---|---|---|---|---|---|---|---|
| Non-permeable substrate (I) | | OPP | | | | | | | | | |
| Pretreatment layer (II) | Pretreatment liquid used | Pretreatment liquid 2 | Pretreatment liquid 3 | Pretreatment liquid 3 | Pretreatment liquid 4 | Pretreatment liquid 5 | Pretreatment liquid 6 | Pretreatment liquid 6 | Pretreatment liquid 7 | Pretreatment liquid 8 | Pretreatment liquid 9 |
| | Pretreatment liquid application amount (before drying) (g/m$^2$) | 4 | 2 | 4 | 2 | 2 | 2 | 4 | 2 | 2 | 2 |
| | Amount of aggregating agent (g/m$^2$) | 0.8 | 0.01 | 0.03 | 0.1 | 0.1 | 0.1 | 0.2 | 0.1 | 0.1 | 0.1 |
| | Amount of other resin (IIR) (g/m$^2$) | 0.2 | 0.1 | 0.2 | 0.06 | 0.04 | 0.6 | 1.2 | 0.1 | 0.1 | 0.1 |
| Ink layer (III) | Ink set used | Ink set 1 | | | | | | | | | |
| | Ink application amount of solid portion (before drying) (g/m$^2$) | 12 | | | | | | | | | |
| | Amount of siloxane/acetylene diol surface additive (mg/m$^2$) | 240 | | | | | | | | | |
| Adhesive layer (IV) | Adhesive composition used Adhesive application amount (g/m$^2$) | Adhesive 1 | | | | | | | | | |
| | | 2 | | | | | | | | | |
| | Content of aromatic isocyanate (g/m$^2$) | 0.69 | | | | | | | | | |
| Deposited film (V) | Type and film thickness | Alumina deposited PP | | | | | | | | | |
| | Adhesive layer contacting surface | Treatment surface | | | | | | | | | |

[Table 6] (continued)

| | | Example 18 | Example 19 | Example 20 | Example 21 | Example 22 | Example 23 | Example 24 | Example 25 | Example 26 | Example 27 |
|---|---|---|---|---|---|---|---|---|---|---|---|
| Evaluation results | Evaluation 1: Delamination/cohesi ve fracture | 5 | 5 | 5 | 5 | 5 | 5 | 5 | 5 | 5 | 5 |
| | Evaluation 2: Delamination/cohesi ve fracture after bending | 5 | 5 | 5 | 5 | 4 | 5 | 5 | 5 | 5 | 5 |
| | Evaluation 3: Gas barrier property | 5 | 5 | 5 | 5 | 5 | 5 | 5 | 5 | 5 | 5 |
| | Evaluation 4: Gas barrier property after bending | 5 | 5 | 5 | 5 | 5 | 5 | 5 | 5 | 5 | 5 |
| | Evaluation 5: Color unevenness and mixed color bleeding | 3 | 3 | 4 | 4 | 4 | 4 | 3 | 4 | 4 | 3 |
| | Evaluation 6: Clearness/visibility | 5 | 4 | 5 | 5 | 5 | 5 | 4 | 5 | 5 | 4 |

44

[Table 6-4]

[Table 6] (continued)

| | | Example 28 | Example 29 | Example 30 | Example 31 | Example 32 | Example 33 | Example 34 | Example 35 | Example 36 | Example 37 |
|---|---|---|---|---|---|---|---|---|---|---|---|
| Non-permeable substrate (I) | | OPP | | | | | | | | | |
| Pretreatment layer (II) | Pretreatment liquid used | Pretreatment liquid 10 | Pretreatment liquid 11 | Pretreatment liquid 12 | Pretreatment liquid 13 | Pretreatment liquid 14 | Pretreatment liquid 15 | Pretreatment liquid 16 | Pretreatment liquid 17 | Pretreatment liquid 18 | Pretreatment liquid 19 |
| | Pretreatment liquid application amount (before drying) (g/m²) | 2 | 2 | 2 | 2 | 2 | 2 | 2 | 2 | 2 | 2 |
| | Amount of aggregating agent (g/m²) | 0.12 | 0.12 | 0.12 | 0.12 | 0.12 | 0.12 | 0.12 | 0.12 | 0.12 | 0.12 |
| | Amount of other resin (IIR) (g/m²) | 0.1 | 0.1 | 0.1 | 0.1 | 0.1 | 0.1 | 0.1 | 0.1 | 0.1 | 0.1 |
| Ink layer (III) | Ink set used | Ink set 1 | | | | | | | | | |
| | Ink application amount of solid portion (before drying) (g/m²) | 12 | | | | | | | | | |
| | Amount of siloxane/acetylene diol surface additive (mg/m²) | 240 | | | | | | | | | |
| Adhesive layer (IV) | Adhesive composition used | Adhesive 1 | | | | | | | | | |
| | Adhesive application amount (g/m²) | 2 | | | | | | | | | |
| | Content of aromatic isocyanate (g/m²) | 0.69 | | | | | | | | | |
| Deposited film (V) | Type and film thickness | Alumina deposited PP | | | | | | | | | |
| | Adhesive layer contacting surface | Treatment surface | | | | | | | | | |

(continued)

[Table 6] (continued)

| | | Example 28 | Example 29 | Example 30 | Example 31 | Example 32 | Example 33 | Example 34 | Example 35 | Example 36 | Example 37 |
|---|---|---|---|---|---|---|---|---|---|---|---|
| Evaluation results | Evaluation 1: Delamination/cohesive fracture | 5 | 5 | 5 | 4 | 3 | 5 | 5 | 5 | 5 | 5 |
| | Evaluation 2: Delamination/cohesive fracture after bending | 5 | 5 | 5 | 5 | 5 | 5 | 5 | 5 | 5 | 4 |
| | Evaluation 3: Gas barrier property | 5 | 5 | 5 | 5 | 5 | 5 | 5 | 5 | 5 | 5 |
| | Evaluation 4: Gas barrier property after bending | 5 | 5 | 5 | 5 | 5 | 5 | 5 | 5 | 5 | 4 |
| | Evaluation 5: Color unevenness and mixed color bleeding | 4 | 4 | 4 | 4 | 3 | 4 | 4 | 4 | 4 | 4 |
| | Evaluation 6: Clearness/visibility | 5 | 5 | 5 | 4 | 3 | 5 | 5 | 5 | 5 | 5 |

[Table 6-5]

| [Table 6] (continued) | | Example 38 | Example 39 | Example 40 | Example 41 | Example 42 | Example 43 | Example 44 | Example 45 | Example 46 | Example 47 |
|---|---|---|---|---|---|---|---|---|---|---|---|
| Non-permeable substrate (I) | | OPP | | | | | | | | | |
| Pretreatment layer (II) | Pretreatment liquid used | Pretreatment liquid 1 | | | | | | | | | |
| | Pretreatment liquid application amount (before drying) (g/m$^2$) | 2 | | | | | | | | | |
| | Amount of aggregating agent (g/m$^2$) | 0.1 | | | | | | | | | |
| | Amount of other resin (IIR) (g/m$^2$) | 0.1 | | | | | | | | | |
| Ink layer (III) | Ink set used | Ink set 1 | Ink set 1 | Ink set 1 | Ink set 2 | Ink set 3 | Ink set 4 | Ink set 5 | Ink set 6 | Ink set 7 | Ink set 8 |
| | Ink application amount of solid portion (before drying) (g/m$^2$) | 1.8 | 18 | 24 | 12 | 12 | 12 | 12 | 12 | 12 | 12 |
| | Amount of siloxane/acetylene diol surface additive (mg/m$^2$) | 36 | 360 | 480 | 240 | 240 | 480 | 240 | 240 | 240 | 240 |
| Adhesive layer (IV) | Adhesive composition used | Adhesive 1 | | | | | | | | | |
| | Adhesive application amount (g/m$^2$) | 2 | | | | | | | | | |
| | Content of aromatic isocyanate (g/m$^2$) | 0.69 | | | | | | | | | |
| Deposited film (V) | Type and film thickness | Alumina deposited PP | | | | | | | | | |
| | Adhesive layer contacting surface | Treatment surface | | | | | | | | | |
| Evaluation results | Evaluation 1: Delamination/cohesive fracture | 5 | 5 | 4 | 5 | 5 | 4 | 5 | 5 | 5 | 5 |
| | Evaluation 2: Delamination/cohesive fracture after bending | 5 | 5 | 4 | 5 | 5 | 4 | 5 | 5 | 5 | 5 |
| | Evaluation 3: Gas barrier property | 4 | 5 | 5 | 5 | 5 | 5 | 5 | 5 | 5 | 5 |
| | Evaluation 4: Gas barrier property after bending | 3 | 5 | 5 | 5 | 5 | 5 | 5 | 5 | 5 | 5 |
| | Evaluation 5: Color unevenness and mixed color bleeding | 4 | 4 | 4 | 4 | 4 | 4 | 4 | 4 | 4 | 4 |
| | Evaluation 6: Clearness/visibility | 5 | 5 | 5 | 5 | 5 | 5 | 5 | 5 | 5 | 5 |

[Table 6-6]

[Table 6] (continued)

| | | Comparative Example 4 | Comparative Example 5 | Comparative Example 6 | Example 48 | Example 49 | Example 50 | Example 51 | Example 52 | Example 53 | Example 54 |
|---|---|---|---|---|---|---|---|---|---|---|---|
| Non-permeable substrate (I) | | OPP | | | | | | | | | |
| Pretreatment layer (II) | Pretreatment liquid used | Pretreatment liquid 1 | | | | | | | | | |
| | Pretreatment liquid application amount (before drying) (g/m²) | 2 | | | | | | | | | |
| | Amount of aggregating agent (g/m²) | 0.1 | | | | | | | | | |
| | Amount of other resin (IIR) (g/m²) | 0.1 | | | | | | | | | |
| Ink layer (III) | Ink set used | Ink set 4 | Ink set 9 | Ink set 10 | Ink set 1 | | | | | | |
| | Ink application amount of solid portion (before drying) (g/m²) | 18 | 12 | 12 | 12 | | | | | | |
| | Amount of siloxane/acetylene diol surface additive (mg/m²) | 720 | 0 | 0 | 240 | | | | | | |
| Adhesive layer (IV) | Adhesive composition used | Adhesive 1 | | | Adhesive 1 | Adhesive 1 | Adhesive 2 | Adhesive 2 | Adhesive 2 | Adhesive 3 | Adhesive 3 |
| | Adhesive application amount (g/m²) | 2 | | | 0.5 | 4 | 2 | 1 | 0.7 | 0.5 | 2 |
| | Content of aromatic isocyanate (g/m²) | 0.69 | | | 0.17 | 1.38 | 0.29 | 0.15 | 0.10 | 0.07 | 0.97 |
| Deposited film (V) | Type and film thickness | Alumina deposited PP | | | | | | | | | |

(continued)

| | Adhesive layer contacting surface | Treatment surface | | | | | | | | | |
|---|---|---|---|---|---|---|---|---|---|---|---|
| Evaluation results | Evaluation 1: Delamination/cohesive fracture | 2 | 2 | 1 | 5 | 5 | 5 | 5 | 5 | 4 | 5 |
| | Evaluation 2: Delamination/cohesive fracture after bending | 1 | 2 | 1 | 5 | 5 | 5 | 5 | 5 | 4 | 5 |
| | Evaluation 3: Gas barrier property | 5 | 3 | 3 | 5 | 5 | 5 | 5 | 5 | 5 | 5 |
| | Evaluation 4: Gas barrier property after bending | 5 | 2 | 2 | 5 | 5 | 5 | 5 | 5 | 5 | 5 |
| | Evaluation 5: Color unevenness and mixed color bleeding | 4 | 1 | 1 | 4 | 4 | 4 | 4 | 4 | 4 | 4 |
| | Evaluation 6: Clearness/visibility | 5 | 1 | 2 | 5 | 5 | 5 | 5 | 5 | 5 | 5 |

[Table 6-7]

| [Table 6] (continued) | | Example 55 | Example 56 | Example 57 | Example 58 | Example 59 | Example 60 | Example 61 | Example 62 |
|---|---|---|---|---|---|---|---|---|---|
| Non-permeable substrate (I) | | OPP | | | | | | | |
| Pretreatment layer (II) | Pretreatment liquid used | Pretreatment liquid 1 | | | | | | | |
| | Pretreatment liquid application amount (before drying) (g/m$^2$) | 2 | | | | | | | |
| | Amount of aggregating agent (g/m$^2$) | 0.1 | | | | | | | |
| | Amount of other resin (IIR) (g/m$^2$) | 0.1 | | | | | | | |
| Ink layer (III) | Ink set used | Ink set 1 | | | | | | | |
| | Ink application amount of solid portion (before drying) (g/m$^2$) | 12 | | | | | | | |
| | Amount of siloxane/acetylene diol surface additive (mg/m$^2$) | 240 | | | | | | | |
| Adhesive layer (IV) | Adhesive composition used | Adhesive 3 | Adhesive 4 | Adhesive 10 | Adhesive 5 | Adhesive 6 | Adhesive 7 | Adhesive 8 | Adhesive 9 |
| | Adhesive application amount (g/m$^2$) | 4 | 2 | 4 | 2 | 2 | 2 | 2 | 2 |
| | Content of aromatic isocyanate (g/m$^2$) | 1.94 | 0 | 0 | 0.54 | 0.54 | 0.70 | 0.69 | 0.33 |
| Deposited film (V) | Type and film thickness | Alumina deposited PP | | | | | | | |
| | Adhesive layer contacting surface | Treatment surface | | | | | | | |
| Evaluation results | Evaluation 1: Delamination/cohesi ve fracture | 5 | 3 | 3 | 5 | 5 | 5 | 5 | 5 |
| | Evaluation 2: Delamination/cohesi ve fracture after bending | 5 | 3 | 3 | 4 | 4 | 5 | 5 | 5 |
| | Evaluation 3: Gas barrier property | 5 | 5 | 5 | 5 | 5 | 5 | 5 | 5 |
| | Evaluation 4: Gas barrier property after bending | 5 | 5 | 5 | 5 | 5 | 4 | 5 | 5 |
| | Evaluation 5: Color unevenness and mixed color bleeding | 4 | 4 | 4 | 4 | 4 | 4 | 4 | 4 |
| | Evaluation 6: Clearness/visibility | 5 | 5 | 5 | 5 | 5 | 5 | 5 | 5 |

Table 6 presents the amount of an aqueous inkjet ink on a film immediately after printing at the time of preparing a grayscale printed matter; the amount of a siloxane-based surface additive and/or acetylene diol-based surface additive contained in the ink layer (III) immediately after preparation; the application amount of an adhesive composition per unit area; the content of an aromatic isocyanate compound contained in the adhesive layer (IV); the type of film overlaid on an adhesive layer precursor; and a surface of the film which is in contact with the adhesive layer (IV) when a laminated body is formed.

[Examples 1 to 62 and Comparative Examples 1 to 6]

The laminated bodies manufactured above were evaluated as follows. Evaluation results thereof are as presented in Table 6 above.

<Evaluation 1: Evaluation of delamination and cohesive fracture>

Into a cylindrical glass container having a diameter of 15 cm, 100 mL of 95% ethanol was added, and a laminated body prepared using a grayscale printed matter was placed such that the non-permeable substrate (I) side was on a lower side and in contact with the 95% ethanol, and was allowed to stand in an environment of 60°C and 80%RH for ten days. Thereafter, a portion in contact with the 95% ethanol was cut into a size of 100 mm in length and 15 mm in width to prepare a test piece. The test piece was put in an Instron type tensile tester, and pulled in an environment of 25°C at a peeling speed of 300 mm/min to measure the attaching force between the non-permeable substrate (I) and the deposited film (V) as T-type peeling strength (N). Such a test was performed five times, and an average value thereof was obtained to evaluate delamination and cohesive fracture. Note that the larger a value of the peeling strength, the less likely delamination and cohesive fracture occur. Evaluation criteria were as follows, and levels of 3 or more were defined as actually usable regions.

(Evaluation criteria)

5: Attaching force of 1.5 N or more
4: Attaching force of 1.0 N or more and less than 1.5 N
3: Attaching force of 0.6 N or more and less than 1.0 N
2: Attaching force of 0.3 N or more and less than 0.6 N
1: Attaching force of less than 0.3 N

<Evaluation 2: Evaluation of delamination and cohesive fracture after bending>

Using a Gelbo Flex tester (BE-1005, manufactured by Tester Sangyo Co., Ltd.), a laminated body prepared using a grayscale printed matter was bent back and forth 10 times under conditions of a stroke of 155 mm, a bending operation of 440°/90 mm, and a bending speed of 40 cpm, and in an environment of 25°C and 80%RH, and then T-type peeling strength (N) between the non-permeable substrate (I) and the deposited film (V) was measured using the same procedure to that in Evaluation 1. This test was performed five times, and an average value thereof was obtained to evaluate delamination and cohesive fracture after bending. Evaluation criteria and determination criteria of the actually usable regions were same to those in Evaluation 1.

<Evaluation 3: Evaluation of gas barrier property (water vapor permeability)>

To a cylindrical glass container having a diameter of 15 cm, 15 g of anhydrous calcium chloride was added, and a laminated body prepared using a grayscale printed matter was placed such that the non-permeable substrate (I) side faced downward so as to cover a mouth of the glass container. Subsequently, a peripheral edge of the mouth was completely sealed, and then the sealed glass container was allowed to stand in an environment of 40°C and 90%RH for ten days. Then, the mass of the glass container was measured at start of standing and every day from the start of standing, then the water vapor permeability was calculated from the increase in mass, and the water vapor permeability was used for evaluation of a gas barrier property. Evaluation criteria were as follows, and levels of 3 or more were defined as actually usable regions.

(Evaluation criteria)

5: Water vapor permeability of less than 2 g/m$^2$·day
4: Water vapor permeability of 2 g/m$^2$·day or more and less than 5 g/m$^2$·day
3: Water vapor permeability of 5 g/m$^2$·day or more and less than 10 g/m$^2$·day
2: Water vapor permeability of 10 g/m$^2$·day or more and less than 30 g/m$^2$·day
1: Water vapor permeability of 30 g/m$^2$·day or more

<Evaluation 4: Evaluation of gas barrier property (water vapor permeability) after bending>

Using a Gelbo Flex tester (BE-1005, manufactured by Tester Sangyo Co., Ltd.), a laminated body prepared using a grayscale printed matter was bent back and forth 10 times under conditions of a stroke of 155 mm, a bending operation of 440°/90 mm, and a bending speed of 40 cpm, and in an environment of 25°C and 80%RH, and then a gas barrier property after bending was evaluated using the same procedure to that in Evaluation 3. Evaluation criteria and determination criteria of the actually usable regions were the same as to those in Evaluation 3.

<Evaluation 5: Evaluation of color unevenness and mixed color bleeding>

The degree of color unevenness of a laminated body prepared using a solid printed matter was visually observed from the non-permeable substrate (I) side to evaluate color unevenness and mixed color bleeding. Evaluation criteria were as follows, and levels of 2 or more were defined as actually usable regions. Note that Table 6 presents only results of the worst color among the printed colors.

(Evaluation criteria)

4: No color unevenness of a solid portion was observed by visual observation and observation with an optical microscope at 50 magnifications
3: Color unevenness was not visually observed, but slight color unevenness was observed when observed with an optical microscope at 50 magnifications
2: Slight color unevenness was visually observed
1: Apparent color unevenness was visually observed

<Evaluation 6: Evaluation of clearness and visibility>

A laminated body prepared using a character printed matter was visually observed from the non-permeable substrate (I) side to evaluate clearness and visibility. Evaluation criteria were as follows, and levels of 3 or more were defined as actually usable regions. Note that Table 6 presents only results of the worst color among the printed colors.

(Evaluation criteria)

5: Characters of all of 4 points, 6 points, and 8 points were clear and legible.
4: Characters of 4 points were slightly poor in clearness but sufficiently legible, and characters of 6 points and 8 points were clear and legible.
3: Characters of 4 points were poor in clearness and illegible. In addition, characters of 6 points were slightly poor in clearness but sufficiently legible, and characters of 8 points were clear and legible.
2: Characters of 4 points and 6 points were poor in clearness and illegible. Meanwhile, characters of 8 points were poor in clearness, but were at a legible level.
1: Characters of 4 points, 6 points, and 8 points were poor in clearness and illegible.

Since the laminated bodies evaluated in Examples 1 to 62 each had the configuration of the present invention described above, all the items evaluated were within actually usable regions.
Note that a laminated body was prepared using the same materials and method as those in Example 40 except that a pressure was applied, by a pressure roller, to a film having the ink layer (III) after drying the aqueous inkjet ink and before applying the non-solvent adhesive composition 1 (Example 40A). This laminated body was subjected to the evaluation of delamination and cohesive fracture (Evaluation 1) and the evaluation of delamination and cohesive fracture after bending (Evaluation 2) described above, and scores thereof were both 5.

In addition, an arithmetic average roughness (Ra) of a surface of a film having the ink layer (III) before and after the pressure application by the pressure roller was measured using the method described above, and the surface roughness Ra was 12.6 $\mu$m (corresponding to the ink layer of Example 40) before the pressure application, and 7.2 $\mu$m (ink layer of Example 40A) after the pressure application. A product of a value of the surface roughness Ra of the ink layer and the amount (480 mg/m$^2$) of the siloxane/acetylene diol surface additive is 6,048 for Example 40 and 3,456 for Example 40A. As presented in Table 6, scores for Example 40 regarding Evaluations 1 and 2 were both "4". On the other hand, as described above, scores for Example 40A regarding Evaluations 1 and 2 were both "5".

From this, it has been confirmed that delamination can be easily suppressed by adjusting the surface roughness (Ra) of the ink layer (III) and further adjusting the product of a value "A" of the Ra and a value "C" of the content of the siloxane-based surface additive and/or the acetylene diol-based surface additive (A*C).

[Examples 63 to 93]

For the laminated bodies manufactured in Examples 1, 16 to 37, 50, 54, 56, and 58 to 62, recyclability (separability of the non-permeable substrate (I) from the laminated body) was also evaluated using the following method. Evaluation results thereof are as presented in Table 7.

[Table 7-1]

| | | Example 63 | Example 64 | Example 65 | Example 66 | Example 67 | Example 68 | Example 69 | Example 70 | Example 71 | Example 72 | Example 73 |
|---|---|---|---|---|---|---|---|---|---|---|---|---|
| | | | | | | | [Table 7] | | | | | |
| Laminate | Example No. when laminate used for evaluation was prepared | Example 1 | Example 16 | Example 17 | Example 18 | Example 19 | Example 20 | Example 21 | Example 22 | Example 23 | Example 24 | Example 25 |
| Pretreatment layer (II) | Pretreatment liquid used | Pretreatment liquid 1 | Pretreatment liquid 1 | Pretreatment liquid 2 | Pretreatment liquid 2 | Pretreatment liquid 3 | Pretreatment liquid 3 | Pretreatment liquid 4 | Pretreatment liquid 5 | Pretreatment liquid 6 | Pretreatment liquid 6 | Pretreatment liquid 7 |
| | Amount of pretreatment liquid application (before drying) $(g/m^2)$ | 2 | 4 | 2 | 4 | 2 | 4 | 2 | 2 | 2 | 4 | 2 |
| | Amount of aggregating agent $(g/m^2)$ | 0.1 | 0.2 | 0.4 | 0.8 | 0.01 | 0.03 | 0.1 | 0.1 | 0.1 | 0.2 | 0.1 |
| | Amount of resin $(g/m^2)$ | 0.1 | 0.2 | 0.1 | 0.2 | 0.1 | 0.2 | 0.06 | 0.04 | 0.6 | 1.2 | 0.1 |
| Adhesive layer (IV) | Adhesive used | Adhesive 1 | | | | | | | | | | |
| | Adhesive application amount $(g/m^2)$ | 2 | | | | | | | | | | |
| | Content of aromatic isocyanate $(g/m^2)$ | 0.69 | | | | | | | | | | |
| Evaluation results | Evaluation 7: Recyclability | 4 | 4 | 4 | 4 | 3 | 4 | 4 | 4 | 4 | 2 | 3 |

[Table 7-2]

[Table 7] (continued)

| | | Example 74 | Example 75 | Example 76 | Example 77 | Example 78 | Example 79 | Example 80 | Example 81 | Example 82 | Example 83 | Example 84 | Example 85 |
|---|---|---|---|---|---|---|---|---|---|---|---|---|---|
| Laminate | Example No. when laminate used for evaluation was prepared | Example 26 | Example 27 | Example 28 | Example 29 | Example 30 | Example 31 | Example 32 | Example 33 | Example 34 | Example 35 | Example 36 | Example 37 |
| Pretreatment layer (II) | Pretreatment liquid used | Pretreatment liquid 8 | Pretreatment liquid 9 | Pretreatment liquid 10 | Pretreatment liquid 11 | Pretreatment liquid 12 | Pretreatment liquid 13 | Pretreatment liquid 14 | Pretreatment liquid 15 | Pretreatment liquid 16 | Pretreatment liquid 17 | Pretreatment liquid 18 | Pretreatment liquid 19 |
| | Amount of pretreatment liquid application (before drying) (g/m$^2$) | 2 | 2 | 2 | 2 | 2 | 2 | 2 | 2 | 2 | 2 | 2 | 2 |
| | Amount of aggregating agent (g/m$^2$) | 0.1 | 0.1 | 0.12 | 0.12 | 0.12 | 0.12 | 0.12 | 0.12 | 0.12 | 0.12 | 0.12 | 0.12 |
| | Amount of resin (g/m$^2$) | 0.1 | 0.1 | 0.10 | 0.10 | 0.10 | 0.10 | 0.10 | 0.10 | 0.10 | 0.10 | 0.10 | 0.10 |
| Adhesive layer (IV) | Adhesive used | Adhesive 1 | | | | | | | | | | | |
| | Adhesive application amount (g/m$^2$) | 2 | | | | | | | | | | | |
| | Content of aromatic isocyanate (g/m$^2$) | 0.69 | | | | | | | | | | | |
| Evaluation results | Evaluation 7: Recyclability | 3 | 3 | 4 | 4 | 4 | 3 | 2 | 4 | 4 | 4 | 4 | 4 |

EP 4 606 565 A1

[Table 7-3]

| | | Example 86 | Example 87 | Example 88 | Example 89 | Example 90 | Example 91 | Example 92 | Example 93 |
|---|---|---|---|---|---|---|---|---|---|
| | | [Table 7] (continued) | | | | | | | |
| Laminate | Example No. when laminate used for evaluation was prepared | Example 50 | Example 54 | Example 56 | Example 58 | Example 59 | Example 60 | Example 61 | Example 62 |
| Pretreatment layer (II) | Pretreatment liquid used | Pretreatment liquid 1 | | | | | | | |
| | Amount of pretreatment liquid application (before drying) (g/m$^2$) | 2 | | | | | | | |
| | Amount of aggregating agent (g/m$^2$) | 0.1 | | | | | | | |
| | Amount of resin (g/m$^2$) | 0.1 | | | | | | | |
| Adhesive layer (IV) | Adhesive used | Adhesive 2 | Adhesive 3 | Adhesive 4 | Adhesive 5 | Adhesive 6 | Adhesive 7 | Adhesive 8 | Adhesive 9 |
| | Adhesive application amount (g/m$^2$) | 2 | 2 | 2 | 2 | 2 | 2 | 2 | 2 |
| | Content of aromatic isocyanate (g/m$^2$) | 0.29 | 0.97 | 0 | 0.54 | 0.54 | 0.70 | 0.69 | 0.33 |
| Evaluation results | Evaluation 7: Recyclability | 4 | 4 | 4 | 4 | 4 | 4 | 4 | 4 |

<Evaluation 7: evaluation of recyclability>

A laminated body was cut into a 4 cm × 4 cm square, immersed in 50 g of a 2% by mass aqueous solution of sodium hydroxide, heated to 70°C, and then stirred for a predetermined time. Thereafter, the laminated body was taken out from the aqueous solution of sodium hydroxide, and after it was washed with water, and dried, the degree of separation of the non-permeable substrate (I) was visually confirmed to evaluate recyclability. Evaluation criteria were as follows, and levels of 2 or more were defined as actually usable regions.

(Evaluation criteria)

4: By stirring for 20 minutes, 80% or more of the non-permeable substrate (I) was separated
3: By stirring for 60 minutes, 80% or more of the non-permeable substrate (I) was separated
2: By stirring for 180 minutes, 80% or more of the non-permeable substrate (I) was separated
1: Even after stirring for 180 minutes, a separation ratio of the non-permeable substrate (I) was less than 80%

**Claims**

1. A laminated body comprising a non-permeable substrate (I), an ink layer (III), an adhesive layer (IV), and a deposited film (V) in this order, wherein

   the ink layer (III) is a layer in which an aqueous inkjet ink containing a pigment, a resin, and a siloxane-based surface additive and/or an acetylene diol-based surface additive is printed,
   a content of the siloxane-based surface additive and/or the acetylene diol-based surface additive per unit area of the ink layer (III) is from 1 to 500 mg/m$^2$, and
   the deposited film (V) includes a resin film and a silica and/or alumina deposited layer.

2. The laminated body according to claim 1, further comprising a pretreatment layer (II) between the non-permeable substrate (I) and the ink layer (III), wherein

   the pretreatment layer (II) is a layer formed with a pretreatment liquid containing an aggregating agent, and
   a content of the aggregating agent per unit area of the pretreatment layer (II) is from 0.02 to 1 g/m$^2$.

3. The laminated body according to claim 2, wherein

   the pretreatment layer (II) further contains a resin (IIR) excluding the aggregating agent, and
   a content of the resin (IIR) per unit area of the pretreatment layer (II) is from 0.05 to 1 g/m$^2$.

4. The laminated body according to any one of claims 1 to 3, wherein the adhesive layer (IV) is a layer formed with a cured film of a non-solvent adhesive composition containing a polyisocyanate compound and a polyol compound.

5. The laminated body according to claim 4, wherein

   the polyisocyanate compound contains an aromatic polyisocyanate compound, and
   a content of the aromatic polyisocyanate compound per unit area of the adhesive layer (IV) is from 0.05 to 2.0 g/m$^2$.

6. The laminated body according to any one of claims 1 to 5, wherein the non-permeable substrate (I) is a polyolefin film, and the resin film is a polyolefin resin film.

7. The laminated body according to any one of claims 1 to 6, wherein the silica and/or alumina deposited layer is in contact with the adhesive layer (IV).

8. A method for manufacturing a laminated body including a non-permeable substrate (I), an ink layer (III), an adhesive layer (IV), and a deposited film (V) in this order, the method comprising steps 1 to 4 below:

step 1: a step of printing an aqueous inkjet ink containing a pigment, a resin, and a siloxane-based surface additive and/or an acetylene diol-based surface additive on the non-permeable substrate (I) such that a content of the siloxane-based surface additive and/or the acetylene diol-based surface additive per unit area of the ink layer (III) after drying is from 1 to 500 mg/m$^2$, and then drying the ink to obtain the ink layer (III);

step 2: a step of forming an adhesive layer precursor on the ink layer (III), and/or the deposited film (V), which is a resin film including a silica and/or alumina deposited layer;

step 3: a step of overlaying the ink layer (III) and the deposited film (V) with the adhesive layer precursor interposed therebetween; and

step 4: a step of curing the adhesive layer precursor to form the adhesive layer (IV).

9. A method for manufacturing a laminated body including a non-permeable substrate (I), a pretreatment layer (II), an ink layer (III), an adhesive layer (IV), and a deposited film (V) in this order, the method comprising steps 0, 1', 2, 3, and 4 below:

step 0: a step of applying a pretreatment liquid containing an aggregating agent onto the non-permeable substrate (I) such that a content of the aggregating agent per unit area of the pretreatment layer (II) after drying and/or curing is from 0.02 to 1 g/m$^2$, and then drying and/or curing the pretreatment liquid to obtain the pretreatment layer (II);

step 1': a step of printing an aqueous inkjet ink containing a pigment, a resin, and a siloxane-based surface additive and/or an acetylene diol-based surface additive on the non-permeable substrate (I) such that a content of the siloxane-based surface additive and/or the acetylene diol-based surface additive per unit area of the ink layer (III) after drying is from 1 to 500 mg/m$^2$, and at least part of the aqueous inkjet ink overlaps the pretreatment layer (II), and then drying the ink to obtain the ink layer (III);

step 2: a step of forming an adhesive layer precursor on the ink layer (III), and/or the deposited film (V), which is a resin film including a silica and/or alumina deposited layer;

step 3: a step of overlaying the ink layer (III) and the deposited film (V) with the adhesive layer precursor interposed therebetween; and

step 4: a step of curing the adhesive layer precursor to form the adhesive layer (IV).

# EP 4 606 565 A1

## INTERNATIONAL SEARCH REPORT

| International application No. |
|---|
| **PCT/JP2023/037230** |

**A. CLASSIFICATION OF SUBJECT MATTER**

***B32B 9/00***(2006.01)i; ***B32B 27/40***(2006.01)i; ***B65D 65/40***(2006.01)i
FI: B32B9/00 A; B32B27/40; B65D65/40 D

According to International Patent Classification (IPC) or to both national classification and IPC

**B. FIELDS SEARCHED**

Minimum documentation searched (classification system followed by classification symbols)

B32B1/00-43/00; B65D65/00-65/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-146912 A (TOYO INK SC HOLDINGS CO., LTD.) 17 September 2020 (2020-09-17) <br> claim 1, paragraphs [0034]-[0044], [0087], [0092], [0119], [0126], [0134]-[0135], [0155], [0159], examples, tables 9-10 | 1-7, 9 |
| Y | | 2-3, 9 |
| A | | 8 |
| X | JP 2022-044189 A (TOYO INK SC HOLDINGS CO., LTD.) 17 March 2022 (2022-03-17) <br> claim 1, paragraphs [0088], [0093], [0121], [0123], [0133], examples, tables 4, 9 | 1, 4-8 |
| Y | | 2-3, 9 |
| A | JP 2021-091765 A (TOYO INK SC HOLDINGS CO., LTD.) 17 June 2021 (2021-06-17) <br> entire text, all drawings | 1-9 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 December 2023** | **26 December 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/037230**

| Patent document cited in search report | | | Publication date (day/month/year) | Patent family member(s) | Publication date (day/month/year) |
|---|---|---|---|---|---|
| JP | 2020-146912 | A | 17 September 2020 | (Family: none) | |
| JP | 2022-044189 | A | 17 March 2022 | (Family: none) | |
| JP | 2021-091765 | A | 17 June 2021 | US 2023/0030249 A1<br>entire text, all drawings<br>WO 2021/117517 A1<br>EP 4074508 A1 | |

Form PCT/ISA/210 (patent family annex) (January 2015)

## REFERENCES CITED IN THE DESCRIPTION

**Patent documents cited in the description**

- JP 2014094495 A
- JP 2004067219 A
- JP 2016060534 A
- JP 2022165966 A
- WO 2013011772 A
- JP 2020132998 A
- JP 2013043936 A
- JP 2017177800 A